# EUROPEAN PATENT APPLICATION

(11) **EP 4 665 041 A1**
(43) Date of publication of application: **17.12.2025**
(21) Application number: 24752845.8
(22) Date of filing: 05.02.2024
(51) Int. Cl.: H04W 72/0446

(54) **METHOD AND APPARATUS FOR WIRELESS COMMUNICATION**

(30) Priority: 10.02.2023 CN 202310108806
(71) Applicant: Apogee Networks, LLC, Dallas, TX 75201 (US)
(72) Inventor: WU, Keying, Shanghai 201206 (CN); ZHANG, Xiaobo, Shanghai 201206 (CN)
(74) Representative: Gunzelmann, Rainer
(86) International application number: PCT/CN2024/075950
(87) International publication number: WO 2024/164990

(57) **Abstract**

Disclosed in the present application are a method and apparatus for wireless communication. The method comprises: a first node receiving a first information block; and receiving a first signal on a first cell after a first time unit set, or, transmitting the first signal on the first cell after the first time unit set, wherein the first information block is used for determining the first time unit set; a spatial relationship of the first signal depends on the first time unit set; and the first node does not monitor at least a PDCCH for a first type of RNTI on the first cell in the first time unit set, or, the first node does not transmit at least a PUSCH on the first cell in the first time unit set. The method improves the reliability of downlink and/or uplink transmission.

## Description

### Technical Field

The present application relates to a transmission method and apparatus in a wireless communication system, in particular to a transmission method and apparatus for wireless signals in a wireless communication system supporting a cellular network.

### Background Art

A multi-antenna technology is a key technology in a 3GPP (3rd Generation Partner Project) LTE (Long-term Evolution) system and an NR (New Radio) system. An additional spatial degree of freedom is obtained by configuring a plurality of antennas at a communication node, such as a base station or UE (User Equipment). The plurality of antennas improve communication quality by beamforming to form a beam pointing to one specific direction. When the plurality of antennas belong to a plurality of TRPs (Transmitter Receiver Points)/panels(antenna panels), additional diversity/multiplexed gain can be obtained using the spatial differences between different TRPs/panels. In the NR system, a beam-based transmission method is introduced. By indicating spatial relationships for signals, including but not limited to a PDCCH (Physical Downlink Control Channel), a PDSCH (Physical Downlink Shared Channel), a PUCCH (Physical Uplink Control Channel), and a PUSCH (Physical Uplink Shared Channel), the UE can use correct spatial parameters to receive or transmit the signals.

Research work for network energy efficiency has been started in the NR R(Release) 18 for investigating technical enhancements in aspects such as a time domain, a frequency domain, a spatial domain, and a power domain to save network power consumption.

### Summary of the Invention

The applicant has found through research that, in a network energy-saving mode, UE (User Equipment) does not monitor at least part of PDCCHs or does not transmit at least a PUSCH during certain periods of time. In this scenario, existing technologies for determining spatial relationships need to be enhanced. In response to the above problem, the present application discloses a solution. It should be noted that while the above description uses a multi-antenna scenario and the network energy-saving mode as examples, the present application is also applicable to other scenarios, such as a single-antenna scenario and a traditional non-energy-saving mode. Furthermore, adopting a unified design scheme for different scenarios (including but not limited to multiple antennas, single antennas, the network energy-saving mode, and a traditional non-energy-saving mode) can also help to reduce hardware complexity and costs. In the absence of conflicts, the embodiments and features in the embodiments in any node of the present application can be applied to any other node. In the absence of conflicts, the embodiments and features in the embodiments of the present application can be arbitrarily combined with each other.

As one embodiment, the interpretation of the terminologies in the present application is made with reference to the definition of the 3GPP standard protocol TS36 series.

As one embodiment, the interpretation of the terminologies in the present application is based on the definition of the 3GPP standard protocol TS38 series.

As one embodiment, the interpretation of the terminologies in the present application is based on the definition of the 3GPP standard protocol TS37 series.

As one embodiment, the interpretation of the terminologies in the present application is made with reference to the definition of the IEEE (Institute of Electrical and Electronics Engineers) standard protocol.

The present application discloses a method used in a first node for wireless communication, characterized by comprising:
receiving a first information block, the first information block being used for determining a first time unit set; and
receiving a first signal on a first cell after the first time unit set, or transmitting a first signal on a first cell after the first time unit set,
wherein a spatial relationship of the first signal depends on the first time unit set; and the first node does not monitor at least a PDCCH for a first type of RNTI on the first cell in the first time unit set, or the first node does not transmit at least a PUSCH on the first cell in the first time unit set.

As one embodiment, in a scenario where the first node does not monitor the at least PDCCH for the first type of RNTI on the first cell in the first time unit set, the spatial relationship of the first signal is a problem that needs to be solved.

As one embodiment, in a scenario where the first node does not transmit the at least PUSCH on the first cell in the first time unit set, the spatial relationship of the first signal is a problem that needs to be solved.

As one embodiment, the above method solves this problem by making the spatial relationship of the first signal depend on the first time unit set.

As one embodiment, the benefits of the above method comprise: improving reliability of downlink and/or uplink transmission.

As one embodiment, the benefits of the above method comprise: improving spectrum efficiency.

As one embodiment, the benefits of the above method comprise: saving signaling overhead.

As one embodiment, the benefits of the above method comprise: ensuring good compatibility, and improving system performance.

According to one aspect of the present application, the above method is characterized in that the spatial relationship of the first signal depends on whether a length of the first time unit set is greater than a first threshold.

According to one aspect of the present application, the above method is characterized in that the spatial relationship of the first signal depends on whether the first node transmits the PUSCH between the first signal and the first time unit set.

According to one aspect of the present application, the above method is characterized in that the spatial relationship of the first signal depends on whether the first node monitors the PDCCH for the first type of RNTI between the first signal and the first time unit set.

According to one aspect of the present application, the above method is characterized in that the spatial relationship of the first signal depends on whether the first node receives a TCI state activation applied to the first cell between the first signal and the first time unit set.

According to one aspect of the present application, the above method is characterized in that the spatial relationship of the first signal depends on whether the first node receives a DCI format that provides an indicated TCI state applied to the first cell between the first signal and the first time unit set.

According to one aspect of the present application, the above method is characterized by comprising:
receiving first DCI, the first DCI indicating a first TCI state,
wherein the first DCI is used for determining a first slot, and the first signal is no earlier than the first slot in a time domain; and whether the spatial relationship of the first signal depends on the first TCI state is related to the first time unit set.

According to one aspect of the present application, the above method is characterized in that the first node is user equipment.

According to one aspect of the present application, the above method is characterized in that the first node is a relay node.

The present application discloses a method used in a second node for wireless communication, characterized by comprising:
transmitting a first information block, the first information block being used for determining a first time unit set; and
transmitting a first signal on a first cell after the first time unit set, or receiving a first signal on a first cell after the first time unit set,
wherein a spatial relationship of the first signal depends on the first time unit set; and a target recipient of the first information block does not monitor at least a PDCCH for a first type of RNTI on the first cell in the first time unit set, or a target recipient of the first information block does not transmit at least a PUSCH on the first cell in the first time unit set.

According to one aspect of the present application, the above method is characterized in that the spatial relationship of the first signal depends on whether a length of the first time unit set is greater than a first threshold.

According to one aspect of the present application, the above method is characterized in that the spatial relationship of the first signal depends on whether the target recipient of the first information block transmits the PUSCH between the first signal and the first time unit set.

According to one aspect of the present application, the above method is characterized in that the spatial relationship of the first signal depends on whether the target recipient of the first information block monitors the PDCCH for the first type of RNTI between the first signal and the first time unit set.

According to one aspect of the present application, the above method is characterized in that the spatial relationship of the first signal depends on whether the target recipient of the first information block receives the TCI state activation applied to the first cell between the first signal and the first time unit set.

According to one aspect of the present application, the above method is characterized in that the spatial relationship of the first signal depends on whether the target recipient of the first information block receives the DCI format that provides an indicated TCI state applied to the first cell between the first signal and the first time unit set.

According to one aspect of the present application, the above method is characterized by comprising:
transmitting first DCI, the first DCI indicating a first TCI state,
wherein the first DCI is used for determining a first slot, and the first signal is no earlier than the first slot in a time domain; and whether the spatial relationship of the first signal depends on the first TCI state is related to the first time unit set.

According to one aspect of the present application, the second node is a base station.

According to one aspect of the present application, the above method is characterized in that the second node is user equipment.

According to one aspect of the present application, the above method is characterized in that the second node is a relay node.

The present application discloses a first node for wireless communication, comprising:
a first processor for receiving a first information block, the first information block being used for determining a first time unit set,
the first processor receiving a first signal on a first cell after the first time unit set, or transmitting a first signal on a first cell after the first time unit set,
wherein a spatial relationship of the first signal depends on the first time unit set; and the first node does not monitor at least a PDCCH for a first type of RNTI on the first cell in the first time unit set, or the first node does not transmit at least a PUSCH on the first cell in the first time unit set.

The present application discloses a method used in a second node for wireless communication, characterized by comprising:
a second processor for transmitting a first information block, the first information block being used for determining a first time unit set,
the second processor transmitting a first signal on a first cell after the first time unit set, or receiving a first signal on a first cell after the first time unit set,
wherein a spatial relationship of the first signal depends on the first time unit set; and a target recipient of the first information block does not monitor at least a PDCCH for a first type of RNTI on the first cell in the first time unit set, or a target recipient of the first information block does not transmit at least a PUSCH on the first cell in the first time unit set.

As one embodiment, compared with the traditional solution, the present application has the following advantages:
The reliability of downlink and/or uplink transmission is improved.
The spectrum efficiency is improved.
The signaling overhead is reduced.
The good compatibility is ensured, and the system performances are improved.

### Brief Description of the Drawings

By reading the detailed description of the non-limiting embodiments in the following drawings, other features, purposes and advantages of the present application will become more obvious.
FIG. 1 shows a flowchart of a first information block and a first signal according to one embodiment of the present application;
FIG. 2 shows a schematic diagram of a network architecture according to one embodiment of the present application;
FIG. 3 shows a schematic diagram of an embodiment of a radio protocol architecture for a user plane and a control plane according to one embodiment of the present application;
FIG. 4 shows a schematic diagram of a first communication device and a second communication device according to an embodiment of the present application;
FIG. 5 shows a flowchart of transmission between a first node and a second node according to one embodiment of the present application;
FIG. 6 shows a flowchart of transmission between a first node and a second node according to one embodiment of the present application;
FIG. 7 shows a schematic diagram of a first information block being used for determining a first time unit set according to one embodiment of the present application;
FIG. 8 shows a schematic diagram of a spatial relationship of a first signal depending on a first time unit set according to one embodiment of the present application;
FIG. 9 shows a schematic diagram of a spatial relationship of a first signal depending on a first time unit set according to one embodiment of the present application;
FIG. 10 shows a schematic diagram of a spatial relationship of a first signal depending on a first time unit set according to one embodiment of the present application;
FIG. 11 shows a schematic diagram of a spatial relationship of a first signal depending on a first time unit set according to one embodiment of the present application;
FIG. 12 shows a schematic diagram of a spatial relationship of a first signal depending on a first time unit set according to one embodiment of the present application;
FIG. 13 shows a schematic diagram of a spatial relationship of a first signal being default according to one embodiment of the present application;
FIG. 14 shows a schematic diagram of a spatial relationship of a first signal being default according to one embodiment of the present application;
FIG. 15 shows a schematic diagram of a spatial relationship of a first signal being default according to one embodiment of the present application;
FIG. 16 shows a schematic diagram of a spatial relationship of a first signal being default according to one embodiment of the present application;
FIG. 17 shows a schematic diagram of a spatial relationship of a first signal depending on a third TCI state according to one embodiment of the present application;
FIG. 18 shows a schematic diagram of a spatial relationship of a first signal and a first TCI state according to one embodiment of the present application;
FIG. 19 shows a schematic diagram of first DCI being used for determining a first slot according to one embodiment of the present application;
FIG. 20 shows a structural block diagram of a processing apparatus used in a first node according to one embodiment of the present application; and
FIG. 21 shows a structural block diagram of a processing apparatus used in a second node according to one embodiment of the present application.

### Detailed Description of Embodiments

The technical solution of the present application will be further described in detail below in conjunction with the accompanying drawings. It should be noted that, in the absence of conflicts, the embodiments and features in the embodiments of the present application can be arbitrarily combined with each other.

### Embodiment 1

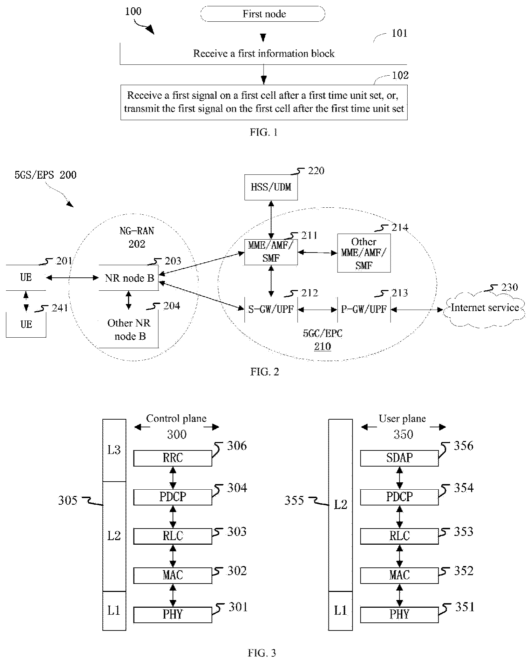

Embodiment 1 illustrates a flowchart of a first information block and a first signal according to one embodiment of the present application, as shown in FIG. 1. In 100 shown in FIG. 1, each block represents one step. In particular, the order of the steps in a block does not represent a specific temporal order relationship among various steps.

In Embodiment 1, a first node in the present application receives a first information block in step 101; and receives a first signal on a first cell after a first time unit set, or transmits a first signal on a first cell after a first time unit set in step 102, wherein the first information block is used for determining the first time unit set; a spatial relationship of the first signal depends on the first time unit set; and the first node does not monitor at least a PDCCH for a first type of RNTI on the first cell in the first time unit set, or the first node does not transmit at least a PUSCH on the first cell in the first time unit set.

As one embodiment, the first information block is borne by a higher layer signaling.

As one embodiment, the first information block is borne by an RRC (Radio Resource Control) signaling.

As one embodiment, the first information block comprises information in all or part of fields in one RRC IE (Information Element).

As one embodiment, the first information block comprises information in all or part of fields in each RRC IE in a plurality of RRC IEs.

As one embodiment, the first information block is borne by an MAC CE (Medium Access Control Layer Control Element).

As one embodiment, the first information block comprises the MAC CE.

As one embodiment, the first information block is borne by DCI (Downlink Control Information).

As one embodiment, the first information block comprises the DCI.

As one embodiment, the first information block comprises information in one or more fields in one piece of DCI.

As one embodiment, the first information block is borne jointly by the RRC signaling and the MAC CE.

As one embodiment, the first information block is borne jointly by the higher layer signaling and the DCI.

As one embodiment, the first information block is cell-specific.

As one embodiment, the first information block is UE-group common.

As one embodiment, the first information block is UE-specific.

As one embodiment, the first information block indicates the first time unit set.

As one embodiment, the first information block explicitly indicates the first time unit set.

As one embodiment, the first information block implicitly indicates the first time unit set.

As one embodiment, the first information block indicates the first time unit set by indicating other information.

As one embodiment, parameters in the first information block are used for determining the first time unit set.

As one embodiment, the first information block indicates the first time unit set by indicating at least one parameter.

As one embodiment, the first information block indicates a first length and a first period, and the first length and the first period are used for determining the first time unit set; and the first length and the first period are positive real numbers, respectively.

As one embodiment, the first length is used for determining a length of the first time unit set.

As one embodiment, the first period is used for determining which of the time units are comprised in the first time unit set.

As one embodiment, the first period is used for determining a location of the first time unit set in the time domain.

As one embodiment, the first information block is used for activating one piece of cell DRX (Discontinuous Reception).

As one embodiment, the first information block is used for activating at least one piece of cell DRX.

As one embodiment, the first information block is used for activating one piece of cell DTX (Discontinuous Transmission).

As one embodiment, the first information block is used for activating at least one piece of cell DTX.

As one embodiment, the first information block is used for activating at least one piece of cell DRX and at least one piece of cell DTX.

As one embodiment, the first time unit set comprises at least one of the time units.

As one embodiment, the first time unit set comprises only one of the time units.

As one embodiment, the first time unit set comprises a plurality of the time units.

As one embodiment, the first time unit set comprises a plurality of the consecutive time units.

As one embodiment, the first time unit set comprises a plurality of the non-consecutive time units.

As one embodiment, the first time unit set consists of a plurality of the consecutive time units.

As one embodiment, the first time unit set occupies consecutive time domain resources.

As one embodiment, the first time unit set occupies non-consecutive time domain resources.

As one embodiment, the time unit refers to: a symbol.

As one embodiment, the time unit refers to: an OFDM (Orthogonal Frequency Division Multiplexing) symbol.

As one embodiment, the time unit refers to: a symbol obtained after an output of a transform precoding subjected to OFDM symbol generation.

As one embodiment, the time unit refers to: a slot.

As one embodiment, the time unit refers to: a sub-frame.

As one embodiment, the time unit refers to: ms.

As one embodiment, the first time unit set comprises a symbol configured as DL (DownLink) by *tdd-UL-DL-ConfigurationCommon* or *tdd-UL-DL-ConfigurationDedicated.*

As one embodiment, the first time unit set comprises a symbol in which the first node is configured, indicated, or scheduled to receive a downlink signal.

As one embodiment, the first time unit set comprises a symbol configured as UL (UpLink) by *tdd-UL-DL-ConfigurationCommon* or *tdd-UL-DL-ConfigurationDedicated.*

As one embodiment, the first time unit set comprises a symbol in which the first node is configured, indicated, or scheduled to transmit an uplink signal.

As one embodiment, the RNTI refers to: Radio Network Temporary Identifier.

As one embodiment, the meaning of the phrase "not monitoring a PDCCH for a first type of RNTI" comprises: not being required to monitor the PDCCH for the first type of RNTI.

As one embodiment, the meaning of the phrase "not monitoring a PDCCH for a first type of RNTI" comprises: not monitoring the PDCCH for the first type of RNTI.

As one embodiment, the meaning of the phrase "not monitoring a PDCCH for a first type of RNTI" refers to: not monitoring the PDCCH for a DCI format of which the CRC (Cyclic Redundancy Check) is scrambled by the first type of RNTI.

As one embodiment, the meaning of the phrase "not monitoring a PDCCH for a first type of RNTI" refers to: not monitoring the PDCCH with respect to the DCI format of which the CRC is scrambled by the first type of RNTI.

As one embodiment, the meaning of the phrase "not monitoring a PDCCH for a first type of RNTI" refers to: not monitoring the PDCCH to detect the DCI format of which the CRC is scrambled by the first type of RNTI.

As one embodiment, the meaning of the phrase "not monitoring a PDCCH for a first type of RNTI" refers to: not monitoring the PDCCH for detecting a DCI format of which the CRC is scrambled by the first type of RNTI.

As one embodiment, the meaning of the phrase "not monitoring a PDCCH for a first type of RNTI" refers to: not being required to monitor the PDCCH for a DCI format of which the CRC is scrambled by the first type of RNTI.

As one embodiment, the meaning of the phrase "not monitoring a PDCCH for the first type of RNTI" refers to: not being required to monitor the PDCCH with respect to a DCI format of which the CRC is scrambled by the first type of RNTI.

As one embodiment, the meaning of the phrase "not monitoring a PDCCH for the first type of RNTI" refers to: not being required to monitor the PDCCH to detect a DCI format of which the CRC is scrambled by the first type of RNTI.

As one embodiment, the meaning of the phrase "not monitoring a PDCCH for a first type of RNTI" refers to: not being required to monitor the PDCCH for detecting a DCI format of which the CRC is scrambled by the first type of RNTI.

As one embodiment, the meaning of the phrase "not monitoring a PDCCH for a first type of RNTI" refers to: not receiving a PDCCH candidate to decode according to a DCI format whose CRC is scrambled by the first type of RNTI.

As one embodiment, the meaning of the phrase "not monitoring a PDCCH for a first type of RNTI" refers to: not decoding a signal received in the PDCCH candidate according to the DCI format of which the CRC is scrambled by the first type of RNTI.

As one embodiment, the first type of RNTI comprises a C (Cell)-RNTI.

As one embodiment, the first type of RNTI refers to: a C-RNTI.

As one embodiment, the first type of RNTI comprises one or more of a C-RNTI, an MCS (Modulation and Coding Scheme)-C-RNTI, a CS (Configured Scheduling)-RNTI, or an SP (Semi-Persistent)-CSI (Channel State Information)-RNTI.

As one embodiment, the first type of RNTI consists of one or more of a C-RNTI, an MCS-C-RNTI, a CS-RNTI, or an SP-CSI-RNTI.

As one embodiment, the first type of RNTI comprises a C-RNTI, an MCS-C-RNTI, a CS-RNTI, and an SP-CSI-RNTI.

As one embodiment, the first type of RNTI consists of a C-RNTI, an MCS-C-RNTI, a CS-RNTI, and an SP-CSI-RNTI.

As one embodiment, the first type of RNTI comprises one or more of a C-RNTI, an MCS-C-RNTI, a CI (Cancellation Indication)-RNTI, a CS-RNTI, an INT (Interruption)-RNTI, an SFI (Slot Format Indication)-RNTI, an SP-CSI-RNTI, a TPC (Transmit Power Control)-PUCCH-RNTI, a TPC-PUSCH-RNTI, a TPC-SRS-RNTI, an AI-RNTI, an SL (Sidelink)-RNTI, or an SL Semi-persistent scheduling V-RNTI.

As one embodiment, the first type of RNTI consists of one or more of a C-RNTI, an MCS-C-RNTI, a CI-RNTI, a CS-RNTI, an INT-RNTI, an SFI-RNTI, an SP-CSI-RNTI, a TPC-PUCCH-RNTI, a TPC-PUSCH-RNTI, a TPC-SRS-RNTI, an AI-RNTI, an SL-RNTI, or an SL Semi-persistent scheduling V-RNTI.

As one embodiment, the first type of RNTI comprises a C-RNTI, an MCS-C-RNTI, a CI-RNTI, a CS-RNTI, an INT-RNTI, an SFI-RNTI, an SP-CSI-RNTI, a TPC-PUCCH-RNTI, a TPC-PUSCH-RNTI, a TPC-SRS-RNTI, an AI-RNTI, a SL-RNTI, and an SL Semi-persistent scheduling V-RNTI.

As one embodiment, the first type of RNTI consists of a C-RNTI, an MCS-C-RNTI, a CI-RNTI, a CS-RNTI, an INT-RNTI, an SFI-RNTI, an SP-CSI-RNTI, a TPC-PUCCH-RNTI, a TPC-PUSCH-RNTI, a TPC-SRS-RNTI, an AI-RNTI, an SL-RNTI, and an SL Semi-persistent scheduling V-RNTI.

As one embodiment, the meaning of the phrase "not monitoring a PDCCH for a first type of RNTI" refers to: not being in an awake state.

As one embodiment, the first type of RNTI is UE-dedicated.

As one embodiment, the PDCCH for the first type of RNTI refers to: a PDCCH that bears DCI whose CRC is scrambled by the first type of RNTI.

As one embodiment, the PDCCH for the first type of RNTI refers to: a UE-dedicated PDCCH.

As one embodiment, the PDCCH for the first type of RNTI refers to: a non-broadcast and non-multicast PDCCH.

As one embodiment, the phrase "monitoring a PDCCH" refers to: monitoring a PDCCH candidate.

As one embodiment, the phrase "monitoring a PDCCH" refers to: monitoring a DCI format transmitted in the PDCCH.

As one embodiment, the phrase "monitoring a PDCCH" refers to: monitoring a DCI format.

As one embodiment, the phrase "monitoring a PDCCH" refers to: detecting a DCI format by monitoring the PDCCH.

As one embodiment, the phrase "monitoring a PDCCH" refers to: monitoring the PDCCH to determine whether a DCI format is detected.

As one embodiment, the phrase "monitoring a PDCCH" refers to: receiving a PDCCH candidate and decoding according to the monitored DCI format.

As one sub-embodiment of the above embodiment, if the decoding is determined to be correct based on the CRC, it is determined that the DCI format is detected; otherwise, it is determined that the DCI format is not detected.

As one embodiment, the first node does not monitor at least a PDCCH for the first type of RNTI on the first cell in the first time unit set.

As one embodiment, the first node does not monitor a PDCCH for the first type of RNTI on the first cell in the first time unit set.

As one embodiment, the first node does not monitor a PDCCH for the first type of RNTI and does not receive a downlink signal on the first cell in the first time unit set.

As one embodiment, the first node does not monitor a PDCCH on the first cell in the first time unit set.

As one embodiment, the first node does not monitor a PDCCH and does not receive a downlink signal on the first cell in the first time unit set.

As one embodiment, the downlink signal comprises: a PDSCH (Physical Downlink Shared Channel).

As one embodiment, the downlink signal comprises: an SPS (Semi-Persistent Scheduling) PDSCH.

As one embodiment, the downlink signal comprises: a CSI-RS (Channel State Information-Reference Signal).

As one embodiment, the downlink signal comprises: a periodic and quasi-static CSI-RS.

As one embodiment, the downlink signal comprises: an SS/PBCH block (Synchronization Signal/Physical Broadcast Channel Block).

As one embodiment, the downlink signal refers to: a PDSCH.

As one embodiment, the downlink signal refers to: a PDSCH and a CSI-RS.

As one embodiment, the downlink signal refers to: a PDSCH and a periodic and quasi-static CSI-RS.

As one embodiment, the downlink signal refers to: a PDSCH, a CSI-RS, and an SS/PBCH block.

As one embodiment, the downlink signal refers to: a PDSCH, a periodic and quasi-static CSI-RS, and an SS/PBCH block.

As one embodiment, the downlink signal refers to: an SPS PDSCH and a periodic and quasi-static CSI-RS.

As one embodiment, the downlink signal refers to: an SPS PDSCH, a periodic and quasi-static CSI-RS, and an SS/PBCH block.

As one embodiment, the first node does not monitor a PDCCH for the first type of RNTI and does not receive a periodic and quasi-static downlink signal on the first cell in the first time unit set.

As one embodiment, the first node does not monitor a PDCCH and does not receive a periodic and quasi-static downlink signal on the first cell in the first time unit set.

As one embodiment, the periodic and quasi-static downlink signal refers to: an SPS PDSCH and a periodic and quasi-static CSI-RS.

As one embodiment, the periodic and quasi-static downlink signal refers to: an SPS PDSCH, a periodic and quasi-static CSI-RS, and an SS/PBCH block.

As one embodiment, the first node disables downlink reception on the first cell in the first time unit set.

As one embodiment, the first node considers that the first cell does not transmit a PDCCH for the first type of RNTI in the first time unit set.

As one embodiment, the first node considers that the first cell does not transmit a PDCCH in the first time unit set.

As one embodiment, the first node considers that the first cell does not transmit a PDCCH for the first type of RNTI and does not transmit a downlink signal in the first time unit set.

As one embodiment, the first node considers that the first cell does not transmit a PDCCH and does not transmit a downlink signal in the first time unit set.

As one embodiment, the first node considers that the first cell does not transmit a PDCCH for the first type of RNTI and does not transmit a periodic and quasi-static downlink signal in the first time unit set.

As one embodiment, the first node considers that the first cell does not transmit a PDCCH and does not transmit a periodic and quasi-static downlink signal in the first time unit set.

As one embodiment, the first node considers that the first cell disables downlink transmission in the first time unit set.

As one embodiment, the first cell disables downlink transmission in the first time unit set.

As one embodiment, the first cell does not transmit a PDCCH for the first type of RNTI in the first time unit set.

As one embodiment, the first cell does not transmit a PDCCH in the first time unit set.

As one embodiment, the first cell does not transmit a PDCCH for the first type of RNTI and does not transmit a downlink signal in the first time unit set.

As one embodiment, the first cell does not transmit a PDCCH and does not transmit a downlink signal in the first time unit set.

As one embodiment, the first cell does not transmit a PDCCH for the first type of RNTI and does not transmit a periodic and quasi-static downlink signal in the first time unit set.

As one embodiment, the first cell does not transmit a PDCCH and does not transmit a periodic and quasi-static downlink signal in the first time unit set.

As one embodiment, the phrase "not transmitting a PDCCH for the first type of RNTI" refers to: not transmitting a DCI format whose CRC is scrambled by the first type of RNTI.

As one embodiment, the phrase "not transmitting a PDCCH" refers to: not transmitting a DCI format transmitted in the PDCCH.

As one embodiment, the phrase "not transmitting a PDCCH for the first type of RNTI" refers to: not transmitting a DCI format whose CRC is scrambled by the first type of RNTI.

As one embodiment, the phrase "not transmitting a PDCCH" refers to: not transmitting a DCI format.

As one embodiment, the first node receives a PDSCH or CSI-RS on the first cell in at least one time unit in the first time unit set.

As one embodiment, the first node receives an SS/PBCH block on the first cell in at least one time unit in the first time unit set.

As one embodiment, the first node monitors a PDCCH on the first cell in at least one time unit in the first time unit set to detect a DCI format whose CRC is scrambled by an RNTI not belonging to the first type of RNTI.

As one embodiment, the first node does not monitor at least a PDCCH for the first type of RNTI on the first cell in the first time unit set, and the first time unit set comprises a symbol configured as DL (Downlink) by *tdd-UL-DL-ConfigurationCommon* or *tdd-UL-DL-ConfigurationDedicated.*

As one embodiment, the first node does not monitor at least a PDCCH for the first type of RNTI on the first cell in the first time unit set, and the first time unit set comprises a symbol configured as DL or fliexible by *tdd-UL-DL-ConfigurationCommon* or *tdd-UL-DL-ConfigurationDedicated,* and the first node is configured to monitor the PDCCH for the first type of RNTI therein.

As one embodiment, the first node does not monitor at least a PDCCH for the first type of RNTI on the first cell in the first time unit set, and the first time unit set comprises a symbol in which the first node is configured to monitor the PDCCH for the first type of RNTI.

As one embodiment, the first node does not monitor at least a PDCCH on the first cell in the first time unit set, and the first time unit set comprises a symbol configured as DL by *tdd-UL-DL-ConfigurationCommon* or *tdd-UL-DL-ConfigurationDedicated.*

As one embodiment, the first node does not monitor at least a PDCCH on the first cell in the first time unit set, and the first time unit set comprises a symbol configured as DL or fliexible by *tdd-UL-DL-ConfigurationCommon* or *tdd-UL-DL-ConfigurationDedicated,* and the first node is configured to monitor the PDCCH therein.

As one embodiment, the first node does not monitor at least a PDCCH on the first cell in the first time unit set, and the first time unit set comprises a symbol in which the first node is configured to monitor the PDCCH.

As one embodiment, the meaning of the phrase "not transmitting at least a PUSCH" refers to: not being in an awake state.

As one embodiment, the first node does not transmit at least a PUSCH on the first cell in the first time unit set.

As one embodiment, the first node does not transmit a PUSCH on the first cell in the first time unit set.

As one embodiment, the first node does not transmit an uplink signal on the first cell in the first time unit set.

As one embodiment, the uplink signal comprises a PUSCH.

As one embodiment, the uplink signal comprises a PUCCH.

As one embodiment, the uplink signal comprises an SRS.

As one embodiment, the uplink signal comprises a periodic and quasi-static SRS.

As one embodiment, the uplink signal comprises CSI (Channel State Information) reporting.

As one embodiment, the uplink signal comprises periodic and quasi-static CSI reporting.

As one embodiment, the uplink signal comprises a PRACH (Physical Random Access Channel).

As one embodiment, the uplink signal refers to a PUSCH and a PUCCH.

As one embodiment, the uplink signal refers to a PUSCH and an SRS.

As one embodiment, the uplink signal refers to a PUSCH, a PUCCH, and an SRS.

As one embodiment, the uplink signal refers to a PUSCH, a PUCCH, an SRS, and a PRACH.

As one embodiment, the uplink signal refers to a PUSCH and a periodic and quasi-static SRS.

As one embodiment, the uplink signal refers to a PUSCH and periodic and quasi-static CSI reporting.

As one embodiment, the uplink signal refers to a PUSCH, a periodic and quasi-static SRS, and periodic and quasi-static CSI reporting.

As one embodiment, the uplink signal refers to a PUSCH, a periodic and quasi-static SRS, periodic and quasi-static CSI reporting, and a PRACH.

As one embodiment, the first node does not transmit a PUSCH, a PUCCH, and an SRS on the first cell in the first time unit set.

As one embodiment, the first node does not transmit a PUSCH, a periodic and quasi-static SRS, and periodic and quasi-static CSI reporting on the first cell in the first time unit set.

As one embodiment, the first node disables uplink transmission on the first cell in the first time unit set.

As one embodiment, the first node considers that a PUSCH transmitted on the first cell in the first time unit set is not received or processed.

As one embodiment, the first node considers that an uplink signal transmitted on the first cell in the first time unit set is not received or processed.

As one embodiment, the first node considers that a PUSCH, a PUCCH, and an SRS that are transmitted on the first cell in the first time unit set are not received or processed.

As one embodiment, the first node considers that a PUSCH, a periodic and quasi-static SRS, and periodic and quasi-static CSI reporting that are transmitted on the first cell in the first time unit set are not received or processed.

As one embodiment, the first cell disables uplink reception in the first time unit set.

As one embodiment, the first cell does not receive or process a PUSCH in the first time unit set.

As one embodiment, the first cell does not receive or process an uplink signal in the first time unit set.

As one embodiment, the first cell does not receive or process a PUSCH, a PUCCH, and an SRS in the first time unit set.

As one embodiment, the first cell does not receive or process a PUSCH, a periodic and quasi-static SRS, and periodic and quasi-static CSI reporting in the first time unit set.

As one embodiment, the first node transmits a PUCCH or an SRS on the first cell in at least one time unit in the first time unit set.

As one embodiment, the first node does not transmit at least a PUSCH on the first cell in the first time unit set, and the first time unit set comprises a symbol configured as UL (Uplink) by *tdd-UL-DL-ConfigurationCommon* or *tdd-UL-DL-ConfigurationDedicated.*

As one embodiment, the first node does not transmit at least a PUSCH on the first cell in the first time unit set, and the first time unit set comprises a symbol configured as UL or flexible by *tdd-UL-DL-ConfigurationCommon* or *tdd-UL-DL-ConfigurationDedicated,* and the first node is indicated or scheduled to transmit the PUSCH therein.

As one embodiment, the first node does not transmit at least a PUSCH on the first cell in the first time unit set, and the first unit cell set comprises a symbol that the first node is indicated or scheduled to transmit the PUSCH therein.

As one embodiment, the first time unit set comprises part of an inactive time of cell DRX.

As one embodiment, the first time unit set belongs to the inactive time of the cell DRX.

As one embodiment, the first time unit set comprises the inactive time within one period of the cell DRX.

As one embodiment, the first time unit set is the inactive time within one period of the cell DRX.

As one embodiment, the first time unit set does not comprise an active time of the cell DRX.

As one embodiment, the first node maintains uplink transmission during the active time of the cell DRX.

As one embodiment, the first node disables uplink transmission during the inactive time of the cell DRX.

As one embodiment, the first node does not transmit a PUSCH during the inactive time of the cell DRX.

As one embodiment, the first node does not transmit a periodic and quasi-static SRS during the inactive time of the cell DRX.

As one embodiment, the first node does not report periodic and quasi-static CSI during the inactive time of the cell DRX.

As one embodiment, the first node enters an energy-saving mode during the inactive time of the cell DRX.

As one embodiment, the first cell maintains uplink reception during the active time of the cell DRX.

As one embodiment, the first cell disables uplink reception during the inactive time of the cell DRX.

As one embodiment, the first cell does not receive or process a PUSCH during the inactive time of the cell DRX.

As one embodiment, the first cell does not receive or process an uplink signal during the inactive time of the cell DRX.

As one embodiment, the first cell enters an energy-saving mode during the inactive time of the cell DRX.

As one embodiment, the first node considers that an uplink signal transmitted within the inactive time of the cell DRX is not received or processed.

As one embodiment, the first node considers that a PUSCH transmitted within the inactive time of the cell DRX is not received or processed.

As one embodiment, the first node considers that a periodic and quasi-static SRS and/or periodic and quasi-static CSI reporting transmitted within the inactive time of the cell DRX is not received or processed.

As one embodiment, the first time unit set comprises part of an inactive time of cell DTX.

As one embodiment, the first time unit set belongs to the inactive time of the cell DTX.

As one embodiment, the first time unit set comprises the inactive time within one period of the cell DTX.

As one embodiment, the first time unit set is the inactive time within one period of the cell DTX.

As one embodiment, the first time unit set does not comprise an active time of the cell DTX.

As one embodiment, the first node maintains downlink reception during the active time of the cell DTX.

As one embodiment, the first node disables downlink reception during the inactive time of the cell DTX.

As one embodiment, the first node does not monitor a PDCCH for the first type of RNTI during the inactive time of the cell DTX.

As one embodiment, the first node does not monitor a PDCCH during the inactive time of the cell DTX.

As one embodiment, the first node does not receive a downlink signal during the inactive time of the cell DTX.

As one embodiment, the first node does not receive a periodic and quasi-static downlink signal during the inactive time of the cell DTX.

As one embodiment, the first node enters an energy-saving mode during the inactive time of the cell DTX.

As one embodiment, the first cell maintains downlink transmission during the active time of the cell DTX.

As one embodiment, the first cell disables downlink transmission during the inactive time of the cell DTX.

As one embodiment, the first cell does not transmit a PDCCH for the first type of RNTI during the inactive time of the cell DTX.

As one embodiment, the first cell does not transmit a PDCCH during the inactive time of the cell DTX.

As one embodiment, the first cell does not transmit a downlink signal during the inactive time of the cell DTX.

As one embodiment, the first node does not transmit a periodic and quasi-static downlink signal during the inactive time of the cell DTX.

As one embodiment, the first cell enters an energy-saving mode during the inactive time of the cell DTX.

As one embodiment, the first node receives the first signal on the first cell after the first time unit set, and the first node does not monitor at least a PDCCH for the first type of RNTI on the first cell in the first time unit set.

As one embodiment, the first node receives the first signal on the first cell after the first time unit set, and the first node does not transmit at least a PUSCH on the first cell in the first time unit set.

As one embodiment, the first node transmits the first signal on the first cell after the first time unit set, and the first node does not transmit at least a PUSCH on the first cell in the first time unit set.

As one embodiment, the first node transmits the first signal on the first cell after the first time unit set, and the first node does not monitor at least a PDCCH for the first type of RNTI on the first cell in the first time unit set.

As one embodiment, the spatial relationship comprises a TCI (Transmission Configuration Indicator) state.

As one embodiment, the spatial relationship comprises a QCL (Quasi Co-Location) assumption.

As one embodiment, the spatial relationship comprises a QCL relationship.

As one embodiment, the spatial relationship comprises QCL parameters.

As one embodiment, the spatial relationship comprises antenna port QCL.

As one embodiment, the spatial relationship comprises a spatial domain filter.

As one embodiment, the spatial domain filter comprises a spatial domain transmission filter.

As one embodiment, the spatial domain filter comprises a spatial domain receive filter.

As one embodiment, the spatial domain filter comprises a spatial filter.

As one embodiment, the spatial filter comprises a Tx spatial filter.

As one embodiment, the spatial filter comprises an Rx spatial filter.

As one embodiment, the spatial relationship comprises a spatial Tx parameter.

As one embodiment, the spatial relationship comprises a spatial Rx parameter.

As one embodiment, the spatial relationship comprises an antenna port.

As one embodiment, the spatial relationship comprises large-scale properties.

As one embodiment, the large-scale properties comprise one or more of delay spread, Doppler spread, Doppler shift, average delay, or the spatial Rx parameter.

As one embodiment, the first node receives the first signal on the first cell after the first time unit set, and the spatial relationship refers to a TCI state.

As one embodiment, the first node receives the first signal on the first cell after the first time unit set, and the spatial relationship refers to the QCL assumption or the QCL relationship.

As one embodiment, the first node receives the first signal on the first cell after the first time unit set, and the spatial relationship refers to one of the TCI state, the QCL assumption, or the QCL relationship.

As one embodiment, the first node transmits the first signal on the first cell after the first time unit set, and the spatial relationship refers to the spatial domain filter.

As one embodiment, the first node transmits the first signal on the first cell after the first time unit set, and the spatial relationship refers to the spatial domain transmission filter.

As one embodiment, the first node transmits the first signal on the first cell after the first time unit set, and the spatial relationship refers to the antenna port.

As one embodiment, the spatial relationship of the first signal is not indicated by a scheduling signaling of the first signal.

As one embodiment, whether the spatial relationship of the first signal is indicated by the scheduling signaling of the first signal depends on the first time unit set.

As one embodiment, the first cell is one serving cell of the first node.

As one embodiment, the first cell is a PCell (Primary cell) of the first node.

As one embodiment, the first cell is a SpCell (Special Cell) of the first node.

As one embodiment, the first cell is a SCell (Secondary Cell) of the first node.

As one embodiment, a PCI (Physical Cell Identifier) of the first cell is different from a PCI of a serving cell of the first node.

As one embodiment, the PCI of the first cell is indicated by an *SSB-MTC-AdditionalPCI* and is different from the PCI of the serving cell of the first node.

As one embodiment, the first signal comprises a baseband signal.

As one embodiment, the first signal comprises a wireless signal.

As one embodiment, the first signal comprises a radio frequency signal.

As one embodiment, the first node receives the first signal on the first cell after the first time unit set.

As one sub-embodiment of the above embodiment, a physical channel occupied by the first signal comprises a PDSCH.

As one sub-embodiment of the above embodiment, a physical channel occupied by the first signal comprises a PDCCH.

As one sub-embodiment of the above embodiment, the first signal comprises a CSI-RS (Channel State Information-Reference Signal).

As one embodiment, the first node transmits the first signal on the first cell after the first time unit set.

As one sub-embodiment of the above embodiment, the physical channel occupied by the first signal comprises a PUSCH (Physical Uplink Shared Channel).

As one sub-embodiment of the above embodiment, the physical channel occupied by the first signal comprises a PUCCH (Physical Uplink Control Channel).

As one sub-embodiment of the above embodiment, a physical channel occupied by the first signal comprises a PRACH.

As one sub-embodiment of the above embodiment, the first signal comprises an SRS (Sounding Reference Signal).

As one embodiment, the first signal occupied by the first signal is later than the last symbol in the first time unit set.

As one embodiment, the first node does not monitor a PCDDH for a first type of RNTI on the first cell between the first signal and the first time unit set.

As one embodiment, the first node does not monitor a PDCCH on the first cell between the first signal and the first time unit set.

As one embodiment, the first node does not receive a downlink signal on the first cell between the first signal and the first time unit set.

As one embodiment, the first node does not transmit an uplink signal on the first cell between the first signal and the first time unit set.

As one embodiment, the first node does not transmit a PUSCH on the first cell between the first signal and the first time unit set.

As one embodiment, the first signal occupies the first downlink symbol after the first time unit set.

As one embodiment, the downlink symbol comprises a symbol configured as DL by *tdd-UL-DL-ConfigurationCommon* or *tdd-UL-DL-ConfigurationDedicated.*

As one embodiment, the downlink symbol comprises a symbol configured as DL by *tdd-UL-DL-ConfigurationCommon* or *tdd-UL-DL-ConfigurationDedicated,* and configured as flexible by *tdd-UL-DL-ConfigurationCommon* or *tdd-UL-DL-ConfigurationDedicated,* and the first node is configured, indicated or scheduled to receive or monitor a downlink signal or downlink channel therein.

As one embodiment, the downlink symbol is a symbol configured as DL by *tdd-UL-DL-ConfigurationCommon* or *tdd-UL-DL-ConfigurationDedicated.*

As one embodiment, the downlink symbol refers to a symbol configured as DL by *tdd-UL-DL-ConfigurationCommon* or *tdd-UL-DL-ConfigurationDedicated,* and configured as flexible by *tdd-UL-DL-ConfigurationCommon* or *tdd-UL-DL-ConfigurationDedicated,* and the first node is configured, indicated or scheduled to receive or monitor a downlink signal or downlink channel therein.

As one embodiment, the first signal occupies the first uplink symbol after the first time unit set.

As one embodiment, the uplink symbol comprises a symbol configured as UL by *tdd-UL-DL-ConfigurationCommon* or *tdd-UL-DL-ConfigurationDedicated.*

As one embodiment, the first uplink symbol comprises a symbol configured as UL by *tdd-UL-DL-ConfigurationCommon* or *tdd-UL-DL-ConfigurationDedicated,* and configured as flexible by *tdd-UL-DL-ConfigurationCommon* or *tdd-UL-DL-ConfigurationDedicated,* and the first node is indicated or scheduled to transmit an uplink signal therein.

As one embodiment, the uplink symbol refers to: a symbol configured as UL by *tdd-UL-DL-ConfigurationCommon* or *tdd-UL-DL-ConfigurationDedicated.*

As one embodiment, the uplink symbol refers to: a symbol configured as UL by *tdd-UL-DL-ConfigurationCommon* or *tdd-UL-DL-ConfigurationDedicated,* and configured as flexible by *tdd-UL-DL-ConfigurationCommon* or *tdd-UL-DL-ConfigurationDedicated,* and the first node is indicated or scheduled to transmit an uplink signal therein.

As one embodiment, between the first signal and the first time unit set, the first node does not receive a TCI state activation applied to the first cell.

As one embodiment, between the first signal and the first time unit set, the first node does not receive a first type of higher layer parameters configured on the first cell; and the first type of higher layer parameters comprise a higher layer parameter of which the name comprises *"tci-StatesPDCCH".*

As one embodiment, the first type of higher layer parameters comprise a higher layer parameter of which the name comprises *"tci-StatesPDCCH-ToAddList"* or *"tci-StatesPDCCH-ToReleaseList".*

As one embodiment, the first type of higher layer parameters comprise a higher layer parameter *tci-StatesPDCCH-ToAddList* and a higher layer parameter *tci-StatesPDCCH-ToReleaseList.*

As one embodiment, the first type of higher layer parameters consists of a higher layer parameter *tci-StatesPDCCH-ToAddList* and a higher layer parameter *tci-StatesPDCCH-ToReleaseList.*

As one embodiment, between the first signal and the first time unit set, the first node does not receive a second type of higher layer parameters configured on the first cell; and the second type of higher layer parameters comprise a higher layer parameter of which the name comprises *"tci-State".*

As one embodiment, the second type of higher layer parameters comprise at least one of a higher layer parameter of which the name comprises *"tci-StatesToAddModList",* a higher layer parameter of which the name comprises *"tci-StatesToReleaseList",* a higher layer parameter of which the name comprises "dl-OrJoint-TCI-State-ToAddModList", or a higher layer parameter of which the name comprises *"dl-OrJoint-TCI-State-ToReleaseList".*

As one embodiment, the second type of higher layer parameters comprises at least one of a higher layer parameter *tci-StatesToAddModList,* a higher layer parameter *tci-StatesToReleaseList,* a higher layer parameter dl-OrJoint-TCI-State-ToAddModList, or a higher layer parameter *dl-OrJoint-TCI-State-ToReleaseList.*

As one embodiment, the second type of higher layer parameters comprise a higher layer parameter *tci-StatesToAddModList,* a higher layer parameter *tci-StatesToReleaseList,* a higher layer parameter dl-OrJoint-TCI-State-ToAddModList, and a higher layer parameter *dl-OrJoint-TCI-State-ToReleaseList.*

As one embodiment, the second type of higher layer parameters consists of a higher layer parameter *tci-StatesToAddModList,* a higher layer parameter *tci-StatesToReleaseList,* a higher layer parameter dl-OrJoint-TCI-State-ToAddModList, and a higher layer parameter *dl-OrJoint-TCI-State-ToReleaseList.*

As one embodiment, between the first signal and the first time unit set, the first node does not receive a DCI format that provides an indicated TCI state applied to the first cell.

As one embodiment, between the first signal and the first time unit set, the first node does not report CSI.

As one embodiment, between the first signal and the first time unit set, the first node does not report CSI for the first cell.

As one embodiment, the CSI for the first cell refers to: a CSI-ResourceConfig comprised in a CSI-ReportConfig IE configuring the CSI is to be found on the first cell.

As one embodiment, the CSI for the first cell refers to: a CSI-ResourceConfig comprised in a CSI-ReportConfig IE configuring the CSI is configured on the first cell.

As one embodiment, the CSI for the first cell refers to: a CSI-ResourceConfig comprised in a CSI-ReportConfig IE configuring the CSI is configured on the first cell.

As one embodiment, the phrase "depending on the first time unit set" refers to: depending on the length of the first time unit set.

As one embodiment, the length of the first time unit set refers to: the number of the time units comprised in the first time unit set.

As one embodiment, the length of the first time unit set refers to: the length of a time domain resource occupied by the first time unit set.

As one embodiment, the length of the first time unit set refers to: a duration of a time domain resource occupied by the first time unit set.

As one embodiment, the phrase "depending on the first time unit set" refers to: depending on whether the first node monitors a PDCCH for the first type of RNTI between the first signal and the first time unit set.

As one embodiment, the phrase "depending on the first time unit set" refers to: depending on whether the first node monitors a PDCCH between the first signal and the first time unit set.

As one embodiment, the phrase "depending on the first time unit set" refers to: depending on whether the first node receives a downlink signal between the first signal and the first time unit set.

As one embodiment, the phrase "depending on the first time unit set" refers to: depending on whether the first signal occupies the first downlink symbol after the first time unit set.

As one embodiment, the phrase "depending on the first time unit set" refers to: depending on whether the first node receives a TCI state activation applied to the first cell between the first signal and the first time unit set.

As one embodiment, the phrase "depending on the first time unit set" refers to: depending on whether the first node receives a first type of higher layer parameters configured on the first cell between the first signal and the first time unit set; and the first type of higher layer parameters comprise a higher layer parameter of which the name comprises *"tci-StatesPDCCH".*

As one embodiment, the phrase "depending on the first time unit set" refers to: depending on whether the first node receives a second type of higher layer parameters configured on the first cell between the first signal and the first time unit set; and the second type of higher layer parameters comprise a higher layer parameter of which the name comprises *"tci-State".*

As one embodiment, the phrase "depending on the first time unit set" refers to: depending on whether the first node receives a DCI format that provides an indicated TCI state applied to the first cell between the first signal and the first time unit set.

As one embodiment, the phrase "depending on the first time unit set" refers to: depending on whether the first node reports CSI for the first cell between the first signal and the first time unit set.

As one embodiment, the phrase "depending on the first time unit set" refers to: depending on whether the first node transmits an uplink signal on the first cell between the first signal and the first time unit set.

As one embodiment, the phrase "depending on the first time unit set" refers to: depending on whether the first node transmits a PUSCH on the first cell between the first signal and the first time unit set.

As one embodiment, the phrase "depending on the first time unit set" refers to: depending on whether the first signal occupies the first uplink symbol after the first time unit set.

As one embodiment, the phrase "depending on the first time unit set" refers to: depending on the length of the first time unit set and whether the first node receives a TCI state activation applied to the first cell between the first signal and the first time unit set.

As one embodiment, the phrase "depending on the first time unit set" refers to: depending on the length of the first time unit set and whether the first node receives a DCI format that provides an indicated TCI state applied to the first cell between the first signal and the first time unit set.

As one embodiment, the phrase "depending on the first time unit set" refers to: depending on the length of the first time unit set and whether the first node transmits an uplink signal on the first cell between the first signal and the first time unit set.

As one embodiment, the phrase "depending on the first time unit set" refers to: depending on the length of the first time unit set and whether the first node transmits a PUSCH on the first cell between the first signal and the first time unit set.

### Embodiment 2

Embodiment 2 illustrates a schematic diagram of a network architecture according to one embodiment of the present application, as shown in FIG. 2.

FIG. 2 illustrates a network architecture 200 of LTE (Long-Term Evolution), LTE-A (Long-Term Evolution Advanced) and future 5G systems. The network architecture 200 of the LTE, LTE-A and future 5G systems is referred to as an EPS (Evolved Packet System) 200. The 5G NR or LTE network architecture 200 may be referred to as a 5GS (5G System)/EPS (Evolved Packet System)200 or some other suitable terminologies. The 5GS/EPS 200 may comprise one or more pieces of UE (User Equipment)201, one piece of UE241 performing sidelink communication with the UE201, an NG-RAN (Next Generation Radio Access Network)202, a 5GC (5G CoreNetwork)/EPC (Evolved Packet Core) 210, an HSS (Home Subscriber Server)/UDM (Unified Data Management) 220, and an Internet service 230. The 5GS/EPS200 may be interconnected with other access networks, but these entities/interfaces are not shown for simplicity. As shown in FIG. 2, the 5GS/EPS200 provides a packet switching service, but those skilled in the art will easily understand that the various concepts presented throughout the present application may be extended to a network that provides a circuit switching service. The NG-RAN202 comprises an NR (New Radio) node B (gNB) 203 and other gNB204. The gNB203 provides user and control plane protocol terminations toward the UE201. The gNB203 may be connected to the other gNB204 via an Xn interface (for example, backhaul). The gNB203 may also be referred to as a base station, a base transceiving station, a radio base station, a radio transceiver, a transceiver function, a basic service set (BSS), an extended service set (ESS), a TRP (Transmitter Receiver Point), or some other suitable terminologies. The gNB203 provides an access point to the 5GC/EPC210 for the UE201. Examples of the UE201 comprise a cellular phone, a smart phone, a session initiation protocol (SIP) phone, a laptop, a personal digital assistant (PDA), a satellite radio, a global positioning system, a multimedia apparatus, a video apparatus, a digital audio player (e.g., an MP3 player), a camera, a game console, a drone, an aircraft, a narrowband Internet of Things device, a machine type communication device, a land vehicle, an automobile, a wearable device, or any other similar functional apparatuses. Those skilled in the art may also refer to the UE201 as a mobile station, a subscriber station, a mobile unit, a subscriber unit, a wireless unit, a remote unit, a mobile apparatus, a wireless apparatus, a wireless communication apparatus, a remote apparatus, a mobile subscriber station, an access terminal, a mobile terminal, a wireless terminal, a remote terminal, a handset, a user agent, a mobile client, a client, or some other suitable terminologies. The gNB203 is connected to the 5GC/EPC210 via an S1/NG interface. The 5GC/EPC210 comprises an MME (Mobility Management Entity)/AMF (Authentication Management Field)/SMF (Session Management Function)211, other MME/AMF/SMF214, an S-GW (Service Gateway)/UPF (User Plane Function) 212, and a P-GW (Packet Data Network Gateway)/UPF213. The MME/AMF/SMF211 is a control node that processes a signaling between the UE201 and the 5GC/EPC210. Generally, the MME/AMF/SMF211 provides bearer and connection management. All user IP (Internet Protocol) packets are transmitted through the S-GW/UPF212, and the S-GW/UPF212 is itself connected to the P-GW/UPF213. The P-GW provides UE IP address allocation and other functions. The P-GW/UPF213 is connected to the Internet service 230. The Internet service 230 comprises operator-corresponding Internet protocol services, which may specifically comprise Internet, intranet, IMS (IP Multimedia Subsystem) and packet switching services.

As one embodiment, the first node in the present application comprises the UE201.

As one embodiment, the second node in the present application comprises the gNB203.

As one embodiment, a radio link between the UE201 and the gNB203 comprises a cellular network link.

As one embodiment, a sender of the first information block comprises the gNB203.

As one embodiment, a recipient of the first information block comprises the UE201.

As one embodiment, a sender of the first signal comprises the UE201.

As one embodiment, a recipient of the first signal comprises the gNB203.

As one embodiment, a sender of the first signal comprises the gNB203.

As one embodiment, a recipient of the first signal comprises the UE201.

As one embodiment, the UE201 supports Energy Saving on a base station side.

As one embodiment, the UE201 supports a cell DRX.

As one embodiment, the UE201 supports a cell DTX.

As one embodiment, the gNB203 supports Energy Saving on a base station side.

As one embodiment, the gNB203 supports a cell DRX.

As one embodiment, the gNB203 supports a cell DTX.

### Embodiment 3

Embodiment 3 illustrates a schematic diagram of an embodiment of a radio protocol architecture for a user plane and a control plane according to one embodiment of the present application, as shown in FIG. 3.

Embodiment 3 shows a schematic diagram of an embodiment of a radio protocol architecture for one user plane and one control plane according to the present application, as shown in FIG. 3. FIG. 3 is a schematic diagram illustrating an embodiment of a radio protocol architecture for a user plane 350 and a control plane 300. FIG. 3 shows a radio protocol architecture for a control plane 300 between a first communication node device (UE, gNB, or RSU in V2X) and a second communication node device (gNB, UE, or RSU in V2X), or between two pieces of UE, using three layers: Layer 1, Layer 2, and Layer 3. The Layer 1 (L1 layer) is the lowest layer and implements various PHY (physical layer) signal processing functions. The L1 layer will be referred to herein as PHY301. The Layer 2 (L2 layer) 305 is above the PHY301 and is responsible for the link between the first communication node device and the second communication node device or between the two pieces of UE. The L2 layer 305 comprises an MAC (Medium Access Control) sublayer 302, an RLC (Radio Link Control) sublayer 303, and a PDCP (Packet Data Convergence Protocol) sublayer 304, which terminate at the second communication node device. The PDCP sublayer 304 provides a plurality of multiplexing between different radio bearers and logical channels. The PDCP sublayer 304 also provides security by encrypting data packets, and provides support for cross-zone mobility of the first communication node device between the second communication node devices. The RLC sublayer 303 provides segmentation and reassembly of upper layer data packets, retransmission of lost data packets, and reordering of data packets to compensate for out-of-order reception due to HARQ. The MAC sublayer 302 provides a plurality of multiplexing between logical and transport channels. The MAC sublayer 302 is also responsible for allocating various radio resources (e.g., resource blocks) in a cell between the first communication node devices. The MAC sublayer 302 is also responsible for HARQ operations. The RRC (Radio Resource Control) sublayer 306 in the Layer 3 (L3 layer) in the control plane 300 is responsible for obtaining radio resources (i.e., radio bearers) and configuring lower layers using an RRC signaling between the second communication node device and the first communication node device. The radio protocol architecture for the user plane 350 comprises a Layer 1 (L1 layer) and a Layer 2 (L2 layer). The radio protocol architecture for the first communication node device and the second communication node device in the user plane 350 is substantially the same as that for the corresponding layers and sublayers in the control plane 300 for the physical layer 351, the PDCP sublayer 354 in the L2 layer 355, the RLC sublayer 353 in the L2 layer 355, and the MAC sublayer 352 in the L2 layer 355, but the PDCP sublayer 354 also provides header compression for upper-layer data packets to reduce radio transmission overhead. The L2 layer 355 in the user plane 350 further comprises an SDAP (Service Data Adaptation Protocol) sublayer 356, and the SDAP sublayer 356 is responsible for mapping between QoS streams and data radio bearers (DRBs) to support the diversity of services. Although not shown in figures, the first communication node device may have several upper layers above the L2 layer 355, comprising a network layer (e.g., an IP layer) terminating at the P-GW on the network side and an application layer terminating at the other end (e.g., a remote UE and a server) of a connection.

As one embodiment, the radio protocol architecture in FIG. 3 is applicable to the first node in the present application.

As one embodiment, the radio protocol architecture in FIG. 3 is applicable to the second node in the present application.

As one embodiment, the first information block is generated in the RRC sublayer 306.

As one embodiment, the first information block is generated in the MAC sublayer 302 or the MAC sublayer 352.

As one embodiment, the first information block is generated in the PHY301 or the PHY351.

As one embodiment, the first signal is generated in the PHY301 or the PHY351.

As one embodiment, the first signal is generated in the MAC sublayer 302 or the MAC sublayer 352.

As one embodiment, the higher layer in the present application refers to a layer above the physical layer.

### Embodiment 4

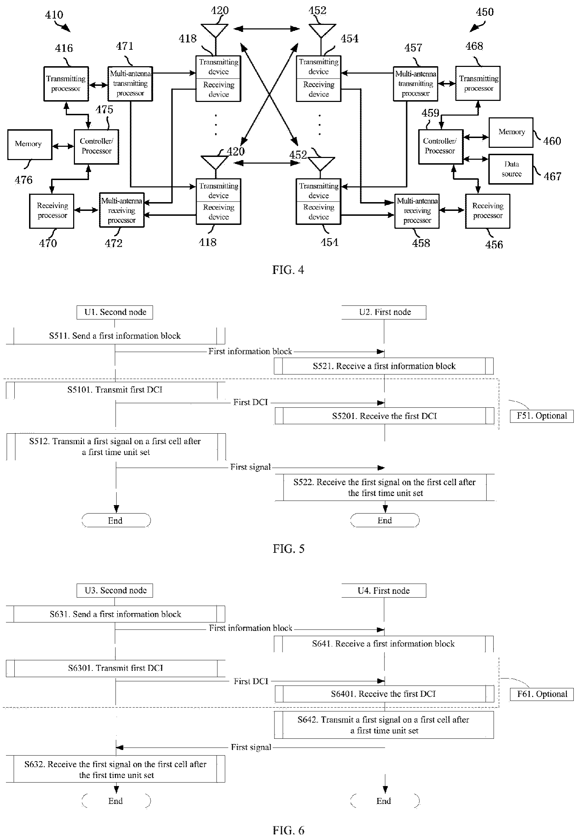

Embodiment 4 illustrates a schematic diagram of a first communication device and a second communication device according to one embodiment of the present application, as shown in FIG. 4. FIG. 4 is a block diagram of a first communication device 410 and a second communication device 450 communicating with each other in an access network.

The first communication device 410 comprises a controller/processor 475, a memory 476, a receiving processor 470, a transmitting processor 416, a multi-antenna receiving processor 472, a multi-antenna transmitting processor 471, a transmitting device/receiving device 418, and an antenna 420.

The second communication device 450 comprises a controller/processor 459, a memory 460, a data source 467, a transmitting processor 468, a receiving processor 456, a multi-antenna transmitting processor 457, a multi-antenna receiving processor 458, a transmitting device/receiving device 454, and an antenna 452.

In the transmission from the first communication device 410 to the second communication device 450, at the first communication device 410, upper layer data packets from a core network are provided to the controller/processor 475. The controller/processor 475 implements the functionality of the L2 layer. In the DL, the controller/processor 475 provides header compression, encryption, packet segmentation and reordering, multiplexing between logical and transport channels, and radio resource allocation to the second communication device 450 based on various priority metrics. The controller/processor 475 is also responsible for HARQ operations, retransmission of lost packets, and signaling to the second communication device 450. The transmitting processor 416 and the multi-antenna transmitting processor 471 implement various signal processing functions for the L1 layer (i.e., the physical layer). The transmitting processor 416 implements coding and interleaving to facilitate forward error correction (FEC) at the second communication device 450, as well as constellation mapping based on various modulation schemes (e.g., binary phase shift keying (BPSK), quadrature phase shift keying (QPSK), M-phase shift keying (M-PSK), and M-quadrature amplitude modulation (M-QAM)). The multi-antenna transmitting processor 471 performs digital spatial precoding, comprising codebook-based precoding and non-codebook-based precoding, and beamforming processing on the coded and modulated symbols to generate one or more parallel streams. The transmitting processor 416 then maps each parallel stream to a subcarrier, multiplexes the modulated symbols with a reference signal (e.g., pilot) in the time domain and/or frequency domain, and then uses an inverse fast Fourier transform (IFFT) to generate a physical channel carrying a time domain multi-carrier symbol stream. The multi-antenna transmitting processor 471 then performs a transmitting analog precoding/beamforming operation on the time domain multi-carrier symbol stream. Each transmitting device 418 converts the baseband multi-carrier symbol stream provided by the multi-antenna transmitting processor 471 into a radio frequency stream, which is then provided to different antennas 420.

In the transmission from the first communication device 410 to the second communication device 450, at the second communication device 450, each receiver 454 receives the signal through its corresponding antenna 452. Each receiving device 454 recovers the information modulated onto the RF carrier and converts the RF stream into a baseband multi-carrier symbol stream which is provided to the receiving processor 456. The receiving processor 456 and the multi-antenna receiving processor 458 implement various signal processing functions of the L1 layer. The multi-antenna receiving processor 458 performs a receive analog precoding/beamforming operation on the baseband multi-carrier symbol stream from the receiving device 454. The receive processor 456 uses a fast Fourier transform (FFT) to convert the baseband multi-carrier symbol stream after the receive analog precoding/beamforming operation from the time domain to the frequency domain. In the frequency domain, the physical layer data signal and the reference signal are demultiplexed by the receiving processor 456, wherein the reference signal will be used for channel estimation, and any parallel stream destined for the second communication device 450 is recovered from the data signal subjected to multi-antenna detection in the multi-antenna receiving processor 458. The symbols on each parallel stream are demodulated and recovered in the receiving processor 456, and soft decisions are generated. The receiving processor 456 then decodes and deinterleaves the soft decisions to recover the upper-layer data and control signals transmitted by the first communication device 410 on the physical channel. The upper layer data and control signals are then provided to the controller/processor 459. The controller/processor 459 implements the functions of the L2 layer. The controller/processor 459 may be associated with a memory 460 storing program codes and data. The memory 460 may be referred to as a computer-readable medium. In the DL, the controller/processor 459 provides demultiplexing between transport and logical channels, packet reassembly, decryption, header decompression, and control signal processing to recover the upper-layer data packets from the core network. The upper layer data packets are then provided to all protocol layers above the L2 layer. Various control signals may also be provided to the L3 for L3 processing. The controller/processor 459 is also responsible for error detection using acknowledgement (ACK) and/or negative acknowledgement (NACK) protocols to support HARQ operations.

In the transmission from the second communication device 450 to the first communication device 410, at the second communication device 450, a data source 467 is used to provide upper-layer data packets to the controller/processor 459. The data source 467 represents all protocol layers above the L2 layer. Similar to the transmission function at the first communication device 410 described in the DL, the controller/processor 459 implements header compression, encryption, packet segmentation and reordering, and multiplexing between logical and transport channels based on the radio resource allocation of the first communication device 410, and implements L2 layer functions for the user plane and the control plane. The controller/processor 459 is also responsible for HARQ operations, retransmission of lost packets, and signaling to the first communication device 410. The transmitting processor 468 performs modulation mapping and channel coding processing, and the multi-antenna transmitting processor 457 performs digital multi-antenna spatial precoding, comprising codebook-based precoding and non-codebook-based precoding, and beamforming processing. The transmitting processor 468 then modulates the generated parallel stream into a multi-carrier/single-carrier symbol stream, which is then provided to different antennas 452 via the transmitting device 454 after analog precoding/beamforming operations in the multi-antenna transmitting processor 457. Each transmitting device 454 first converts the baseband symbol stream provided by the multi-antenna transmitting processor 457 into a radio frequency symbol stream, which is then provided to the antenna 452.

In the transmission from the second communication device 450 to the first communication device 410, the function at the first communication device 410 is similar to the receiving function at second communication device 450 described in the transmission from the first communication device 410 to the second communication device 450. Each receiving device 418 receives the radio frequency signal through its corresponding antenna 420, converts the received radio frequency signal into a baseband signal, and provides the baseband signal to the multi-antenna receiving processor 472 and the receiving processor 470. The receiving processor 470 and the multi-antenna receiving processor 472 jointly implement the L1 layer function. The controller/processor 475 implements the function of the L2 layer. The controller/processor 475 may be associated with a memory 476 storing program codes and data. The memory 476 may be referred to as a computer-readable medium. The controller/processor 475 provides multiplexing between transport and logical channels, packet reassembly, decryption, header decompression, and control signal processing to recover upper-layer data packets from the second communication device 450. The upper-layer data packets from the controller/processor 475 may be provided to the core network. The controller/processor 475 is also responsible for error detection using ACK and/or NACK protocols to support HARQ operations.

As one embodiment, the second communication device 450 comprises: at least one processor and at least one memory, the at least one memory comprising computer program codes; and the at least one memory and the computer program codes are configured to be used together with the at least one processor. The second communication device 450 apparatus at least receives the first information block; and receives the first signal on the first cell after the first time unit set, or transmits the first signal on the first cell after the first time unit set, wherein the first information block is used for determining the first time unit set; a spatial relationship of the first signal depends on the first time unit set; and the second communication device 450 does not monitor at least a PDCCH for a first type of RNTI on the first cell in the first unit set, or the second communication device 450 does not transmit at least a PUSCH on the first cell in the first time unit set.

As one embodiment, the second communication device 450 comprises: a memory storing a computer-readable instruction program, wherein the computer-readable instruction program generates actions when executed by at least one processor, and the actions comprise: receiving the first information block; and receiving the first signal on the first cell after the first time unit set, or transmitting the first signal on the first cell after the first time unit set.

As one embodiment, the first communication device 410 comprises: at least one processor and at least one memory, the at least one memory comprising computer program codes; the at least one memory and the computer program codes are configured to be used together with the at least one processor. The first communication device 410 apparatus at least transmits the first information block; and transmits the first signal on the first cell after the first time unit set, or receives the first signal on the first cell after the first time unit set, wherein the first information block is used for determining the first time unit set; a spatial relationship of the first signal depends on the first time unit set; and a target recipient of the first information block does not monitor at least a PDCCH for a first type of RNTI on the first cell in the first time unit set, or a target recipient of the first information block does not transmit at least a PUSCH on the first cell in the first time unit set.

As one embodiment, the first communication device 410 comprises: a memory storing a computer-readable instruction program, wherein the computer-readable instruction program generates actions when executed by at least one processor, and the actions comprise: transmitting the first information block; and transmitting the first signal on the first cell after the first time unit set, or receiving the first signal on the first cell after the first time unit set.

As one embodiment, the first node in the present application comprises the second communication device 450.

As one embodiment, the second node in the present application comprises the first communication device 410.

As one embodiment, at least one of {the antenna 452, the receiving device 454, the receiving processor 456, the multi-antenna receiving processor 458, the controller/processor 459, the memory 460, and the data source 467} is used for receiving the first information block; and at least one of {the antenna 420, the transmitting device 418, the transmitting processor 416, the multi-antenna transmitting processor 471, the controller/processor 475, and the memory 476} is used for transmitting the first information block.

As one embodiment, at least one of {the antenna 420, the receiving device 418, the receiving processor 470, the multi-antenna receiving processor 472, the controller/processor 475, and the memory 476} is used for receiving the first signal on the first cell after the first time unit set; and at least one of {the antenna 452, the transmitting device 454, the transmitting processor 468, the multi-antenna transmitting processor 457, the controller/processor 459, the memory 460, and the data source 467} is used for transmitting the first signal on the first cell after the first time unit set.

As one embodiment, at least one of {the antenna 452, the receiving device 454, the receiving processor 456, the multi-antenna receiving processor 458, the controller/processor 459, the memory 460, and the data source 467} is used for receiving the first signal on the first cell after the first time unit set; and at least one of {the antenna 420, the transmitting device 418, the transmitting processor 416, the multi-antenna transmitting processor 471, the controller/processor 475, and the memory 476} is used for transmitting the first signal on the first cell after the first time unit set.

As one embodiment, at least one of {the antenna 452, the receiving device 454, the receiving processor 456, the multi-antenna receiving processor 458, the controller/processor 459, the memory 460, and the data source 467} is used for receiving the first DCI; and at least one of {the antenna 420, the transmitting device 418, the transmitting processor 416, the multi-antenna transmitting processor 471, the controller/processor 475, and the memory 476} is used for transmitting the first DCI.

### Embodiment 5

Embodiment 5 illustrates a flowchart of transmission according to one embodiment of the present application, as shown in FIG. 5. In FIG. 5, a second node U1 and a first node U2 are communication nodes transmitted via an air interface. In FIG. 5, the steps in block F51 are optional.

For the second node U1, a first information block is transmitted in step S511; first DCI is transmitted in step S5101; and a first signal is transmitted on a first cell after a first time unit set in step S512.

For the first node U2, a first information block is received in step S521; first DCI is received in step S5201; and a first signal is received on a first cell after a first time unit set in step S522.

In Embodiment 5, the first information block is used by the first node U2 for determining the first time unit set; a spatial relationship of the first signal depends on the first time unit set; and the first node U2 does not monitor at least a PDCCH for a first type of RNTI on the first cell in the first time unit set, or the first node U2 does not transmit at least a PUSCH on the first cell in the first time unit set.

As one embodiment, the first node U2 is the first node in the present application.

As one embodiment, the second node U1 is the second node in the present application.

As one embodiment, an air interface between the second node U1 and the first node U2 comprises a radio interface between a base station device and user equipment.

As one embodiment, an air interface between the second node U1 and the first node U2 comprises a radio interface between a relay node device and user equipment.

As one embodiment, an air interface between the second node U1 and the first node U2 comprises a radio interface between user equipment and user equipment.

As one embodiment, the second node U1 is a maintenance base station of a serving cell of the first node U2.

As one embodiment, the second node U1 is a maintenance base station of the first cell.

As one embodiment, the target recipient of the first information block is a target recipient of the first signal.

As one embodiment, the first information block is transmitted on the PDSCH.

As one embodiment, the first information block is transmitted on the PDCCH.

As one embodiment, the first node receives the first signal on the first cell after the first time unit set, and the first signal is transmitted on the PDSCH.

As one embodiment, the first node receives the first signal on the first cell after the first time unit set, and the first signal is transmitted on the PDCCH.

As one embodiment, the steps in block F51 in FIG. 5 exist; the first DCI indicates a first TCI state; the first DCI is used by the first node U2 for determining a first slot, and the first signal is not earlier than the first slot in the time domain; and whether the spatial relationship of the first signal depends on the first TCI state is related to the first time unit set.

As one embodiment, the first DCI is earlier than the first time unit set in the time domain.

As one embodiment, the first DCI is earlier than the last symbol in the first time unit set in the time domain.

As one embodiment, the first DCI is earlier than the last time unit in the first time unit set in the time domain.

As one embodiment, the first DCI is earlier than the first symbol in the first time unit set in the time domain.

As one embodiment, there is one symbol in the first time unit set that is earlier than the first DCI in the time domain.

As one embodiment, the first DCI is earlier than the first information block in the time domain.

As one embodiment, the first DCI is later than the first information block in the time domain.

As one embodiment, the first DCI is transmitted on the PDCCH.

### Embodiment 6

Embodiment 6 illustrates a flowchart of transmission according to one embodiment of the present application, as shown in FIG. 6. In FIG. 6, a second node U3 and a first node U4 are communication nodes transmitted via an air interface. In FIG. 6, the steps in block F61 are optional.

For the second node U3, a first information block is transmitted in step S631; first DCI is transmitted in step S6301; and a first signal is received on a first cell after a first time unit set in step S632.

For the first node U4, a first information block is received in step S641; first DCI is received in step S6401; and a first signal is transmitted on a first cell after a first time unit set in step S642.

In Embodiment 6, the first information block is used by the first node U4 for determining the first time unit set; a spatial relationship of the first signal depends on the first time unit set; and the first node U4 does not monitor at least a PDCCH for a first type of RNTI on the first cell in the first time unit set, or the first node U4 does not transmit at least a PUSCH on the first cell in the first time unit set.

As one embodiment, the first node U4 is the first node in the present application.

As one embodiment, the second node U3 is the second node in the present application.

As one embodiment, the target recipient of the first information block is a sender of the first signal.

As one embodiment, the first node transmits the first signal on the first cell after the first time unit set, and the first signal is transmitted on the PUSCH.

As one embodiment, the first node transmits the first signal on the first cell after the first time unit set, and the first signal is transmitted on the PUCCH.

### Embodiment 7

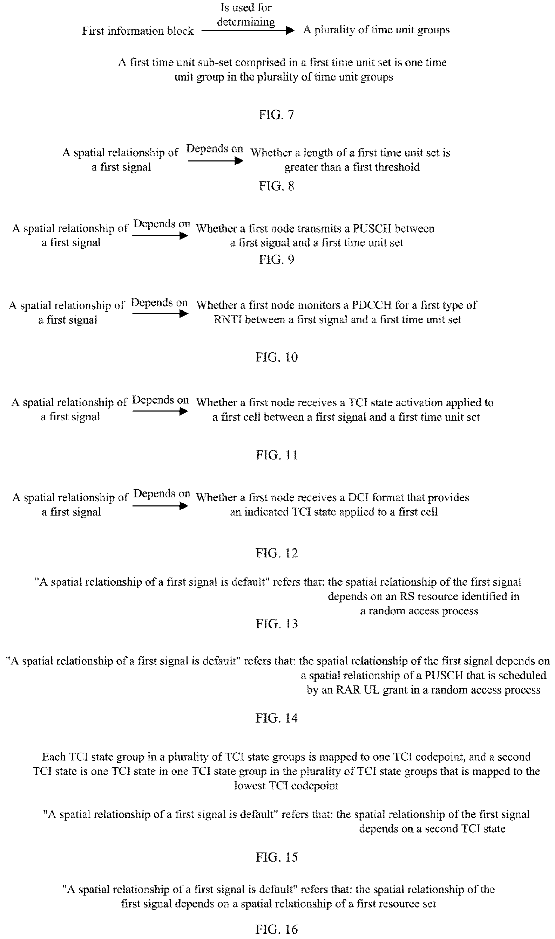

Embodiment 7 illustrates a schematic diagram of a first information block being used for determining a first time unit set according to one embodiment of the present application, as shown in FIG. 7. In Embodiment 7, the first information block is used for determining a plurality of time unit groups, and each time unit group in the plurality of time unit groups comprises at least one of the time units; and the first time unit set comprises a first time unit sub-set, and the first time unit sub-set is one time unit group in the plurality of time unit groups.

As one embodiment, the numbers of the time units comprised in any two time unit groups in the plurality of time unit groups are equal.

As one embodiment, each time unit group in the plurality of time unit groups comprises only one of the time units.

As one embodiment, each time unit group in the plurality of time unit groups comprises a plurality of the time units.

As one embodiment, each time unit group in the plurality of time unit groups comprises a plurality of the consecutive time units.

As one embodiment, each time unit group in the plurality of time unit groups consists of a plurality of the consecutive time units.

As one embodiment, each time unit group in the plurality of time unit groups occupies consecutive time domain resources.

As one embodiment, any two adjacent time unit groups in the plurality of time unit groups are non-consecutive in the time domain.

As one embodiment, the plurality of time unit groups are orthogonal to each other pairwise in the time domain.

As one embodiment, the plurality of time unit groups are periodic in the time domain.

As one embodiment, the plurality of time unit groups are equally spaced in the time domain.

As one embodiment, the first time unit set is the first time unit sub-set.

As one embodiment, the first time unit set comprises at least one of the time units not belonging to the first time unit sub-set.

As one embodiment, the first time unit sub-set is the latest time unit group earlier than the first signal in the plurality of time unit groups.

As one embodiment, the first information block indicates a first length and a first period, and the first length and the first period are used for determining the plurality of time unit groups; and the first length and the first period are positive real numbers, respectively.

As one embodiment, the plurality of time unit groups uses the first period as the period in the time domain.

As one embodiment, the period of the plurality of time unit groups is equal to the first period.

As one embodiment, a time interval between any two adjacent time unit groups in the plurality of time unit groups is equal to the first period.

As one embodiment, a time interval between starting moments of any two adjacent time unit groups in the plurality of time unit groups is equal to the first period.

As one embodiment, the meaning of "two adjacent time unit groups in the plurality of time unit groups" refers to: there does not exist one time unit group in the plurality of time unit groups that is located between the two adjacent time unit groups in the time domain.

As one embodiment, a length of each time unit group in the plurality of time unit groups is equal to the first length.

As one embodiment, the length of each time unit group in the plurality of time unit groups is equal to the first period minus the first length.

As one embodiment, a length of one time unit group refers to: a length of time domain resources occupied by the one time unit group.

As one embodiment, the length of one time unit group refers to: the number of the time units comprised in the one time unit group.

As one embodiment, the first length is measured in millisecond (ms).

As one embodiment, the first length is measured in the number of symbols.

As one embodiment, the first length is measured in the number of slots.

As one embodiment, the first length is measured in the number of sub-frames.

As one embodiment, the first period is measured in millisecond (ms).

As one embodiment, the first period is measured in the number of symbols.

As one embodiment, the first period is measured in the number of slots.

As one embodiment, the first period is measured in the number of sub-frames.

As one embodiment, the plurality of time unit groups comprise an inactive time of cell DTX.

As one embodiment, each time unit group in the plurality of time unit groups comprises part of the inactive time of the cell DTX.

As one embodiment, each time unit group in the plurality of time unit groups is the inactive time within one period of the cell DTX.

As one embodiment, the plurality of time unit groups belong to the inactive time of the cell DTX.

As one embodiment, the plurality of time unit groups comprise an inactive time of cell DRX.

As one embodiment, each time unit group in the plurality of time unit groups comprises part of the inactive time of the cell DRX.

As one embodiment, each time unit group in the plurality of time unit groups is the inactive time within one period of the cell DRX.

As one embodiment, the plurality of time unit groups belong to the inactive time of the cell DRX.

As one embodiment, the first node does not monitor a PDCCH for the first type of RNTI on the first cell in the plurality of time unit groups.

As one embodiment, the first node does not monitor the PDCCH on the first cell in the plurality of time unit groups.

As one embodiment, the first node does not receive a downlink signal on the first cell in the plurality of time unit groups.

As one embodiment, the first node does not receive a periodic and quasi-static downlink signal on the first cell in the plurality of time unit groups.

As one embodiment, the first node disables downlink reception on the first cell in the plurality of time unit groups.

As one embodiment, the first cell disables downlink transmission in the plurality of time unit groups.

As one embodiment, the second node disables downlink transmission in the plurality of time unit groups.

As one embodiment, the first node does not perform uplink transmission on the first cell in the plurality of time unit groups.

As one embodiment, the first node disables uplink transmission on the first cell in the plurality of time unit groups.

As one embodiment, the first node does not transmit the PUSCH on the first cell in the plurality of time unit groups.

As one embodiment, the first node considers that a signal transmitted on the first cell in the plurality of time unit groups is not received or processed.

As one embodiment, the first node considers that the PUSCH transmitted on the first cell in the plurality of time unit groups is not received or processed.

As one embodiment, the first cell disables uplink reception in the plurality of time unit groups.

As one embodiment, the first cell does not receive or process the PUSCH in the plurality of time unit groups.

As one embodiment, the second node disables uplink reception in the plurality of time unit groups.

As one embodiment, the second node does not receive or process the PUSCH in the plurality of time unit groups.

As one embodiment, the first information block is used for determining a second time unit group pool, the second time unit group pool and the plurality of time unit groups are orthogonal in the time domain, the second time unit group pool comprises a positive integer number of time unit groups greater than 1, and each time unit group in the second time unit group pool comprises at least one of the time units.

As one embodiment, the plurality of time unit groups comprise time units not belonging to the second time unit group pool.

As one embodiment, the plurality of time unit groups consist of time units not belonging to the second time unit group pool.

As one embodiment, the first information block indicates the plurality of time unit groups by indicating the second time unit group pool.

As one embodiment, one time unit group in the second time unit group pool comprises only one of the time units.

As one embodiment, one time unit group in the second time unit group pool comprises a plurality of the time units.

As one embodiment, any two adjacent time unit groups in the second time unit group pool are non-consecutive in the time domain.

As one embodiment, time unit groups in the second time unit group pool are periodic in the time domain.

As one embodiment, the time unit groups in the second time unit group pool are equally spaced in the time domain.

As one embodiment, the first information block indicates the second time unit group pool.

As one embodiment, the first information block indicates a first length and a first period, and the first length and the first period are used for determining the second time unit group pool; and the first length and the first period are positive real numbers, respectively.

As one embodiment, the time unit groups in the second time unit group pool uses the first period as the period in the time domain.

As one embodiment, a time interval between starting moments of any two adjacent time unit groups in the second time unit group pool is equal to the first period.

As one embodiment, the meaning of "two adjacent time unit groups in the second time unit group pool" refers to: there does not exist one time unit group in the second time unit group pool that is located between the two adjacent time unit groups in the time domain.

As one embodiment, a length of each time unit group in the second time unit group pool is equal to the first length.

As one embodiment, the length of each time unit group in the second time unit group pool is equal to the first period minus the first length.

As one embodiment, the second time unit group pool comprises an active time of cell DTX.

As one embodiment, each time unit group in the second time unit group pool comprises part of the active time of the cell DTX.

As one embodiment, each time unit group in the second time unit group pool is the active time within one period of the cell DTX.

As one embodiment, the second time unit group pool belongs to the active time of the cell DTX.

As one embodiment, the second time unit group pool comprises an active time of cell DRX.

As one embodiment, each time unit group in the second time unit group pool comprises part of the active time of the cell DRX.

As one embodiment, each time unit group in the second time unit group pool is the active time within one period of the cell DRX.

As one embodiment, the second time unit group pool belongs to the active time of the cell DRX.

As one embodiment, the first node does not monitor the PDCCH on the first cell in the first time unit sub-set, and the first node monitors a PDCCH for a second type of RNTI in at least one time unit in the first time unit set not belonging to the first time unit sub-set; and the second type of RNTI does not comprise RNTIs that belong to the first type of RNTI.

As one embodiment, the first node does not receive a downlink signal on the first cell in the first time unit sub-set, and the first node receives the downlink signal in at least one time unit in the first time unit set not belonging to the first time unit sub-set.

As one embodiment, the first node does not receive a periodic and quasi-static downlink signal on the first cell in the first time unit sub-set, and the first node receives the periodic and quasi-static downlink signal in at least one time unit in the first time unit set not belonging to the first time unit sub-set.

As one embodiment, the first node is not configured, indicated, or scheduled to monitor the PDCCH for the first type of RNTI in any time unit in the first time unit set not belonging to the first time unit sub-set.

As one embodiment, the first node considers that the PUSCH transmitted on the first cell in the first time unit sub-set is not received or processed, and the first node considers that the PUSCH transmitted on the first cell in at least one time unit in the first time unit set not belonging to the first time unit sub-set is received and processed.

As one embodiment, the first node is not indicated or scheduled to transmit the PUSCH in any time unit in the first time unit set not belonging to the first time unit sub-set.

As one embodiment, the first time unit sub-set is the inactive time within one period of the cell DTX.

As one embodiment, any time unit in the first time unit set not belonging to the first time unit sub-set does not comprise the inactive time of the cell DTX.

As one embodiment, the first time unit sub-set is the inactive time within one period of the cell DRX.

As one embodiment, any time unit in the first time unit set not belonging to the first time unit sub-set does not comprise the inactive time of the cell DRX.

### Embodiment 8

Embodiment 8 illustrates a schematic diagram of a spatial relationship of a first signal depending on a first time unit set according to one embodiment of the present application, as shown in FIG. 8. In Embodiment 8, the spatial relationship of the first signal depends on whether a length of the first time unit set is greater than a first threshold.

As one embodiment, when the length of the first time unit set is greater than the first threshold, the spatial relationship of the first signal is default.

As one embodiment, when the length of the first time unit set is greater than or equal to the first threshold, the spatial relationship of the first signal is default.

As one embodiment, the characteristics of the above method comprise: after the first node does not monitor the PDCCH for the first type of RNTI within the time unit set of which the length is greater than or not less than the first threshold, the spatial relationship of the first signal is default.

As one embodiment, the characteristics of the above method comprise: after the first node does not transmit the PUSCH within the time unit set of which the length is greater than or not less than the first threshold, the spatial relationship of the first signal is default.

As one embodiment, the benefits of the above method comprise: avoiding performance losses caused by inaccurate spatial relationships and improving the robustness of downlink or uplink transmission.

As one embodiment, when the length of the first time unit set is less than the first threshold, the spatial relationship of the first signal depends on a third TCI state.

As one embodiment, when the length of the first time unit set is less than or equal to the first threshold, the spatial relationship of the first signal depends on the third TCI state.

As one embodiment, the first threshold is one non-negative real number.

As one embodiment, the first threshold is one non-negative integer.

As one embodiment, the first threshold is configurable.

As one embodiment, the first threshold is configured by an RRC signaling.

As one embodiment, the first threshold is configured by an MAC CE.

As one embodiment, the first threshold is fixed.

As one embodiment, the first threshold is not required to be configured.

As one embodiment, the first threshold is measured in the number of symbols.

As one embodiment, the first threshold is measured in the number of slots.

As one embodiment, the first threshold is measured in the number of sub-frames.

As one embodiment, the first threshold is measured in sub-frame milliseconds (ms).

### Embodiment 9

Embodiment 9 illustrates a schematic diagram of a spatial relationship of a first signal depending on a first time unit set according to one embodiment of the present application, as shown in FIG. 9. In Embodiment 9, the spatial relationship of the first signal depends on whether the first node transmits the PUSCH between the first signal and the first time unit set.

As one embodiment, the first node does not transmit at least a PUSCH on the first cell in the first time unit set, and the spatial relationship of the first signal depends on whether the first node transmits the PUSCH between the first signal and the first time unit set.

As one embodiment, the spatial relationship of the first signal depends on whether the first node performs uplink transmission between the first signal and the first time unit set.

As one embodiment, the first node does not transmit at least a PUSCH on the first cell in the first time unit set, and the spatial relationship of the first signal depends on whether the first node performs uplink transmission between the first signal and the first time unit set.

As one embodiment, the spatial relationship of the first signal depends on whether the first signal occupies the first uplink symbol after the first time unit set.

As one embodiment, the first node does not transmit at least a PUSCH on the first cell in the first time unit set, and the spatial relationship of the first signal depends on whether the first signal occupies the first uplink symbol after the first time unit set.

As one embodiment, when the first node does not transmit a PUSCH between the first signal and the first time unit set, the spatial relationship of the first signal is default.

As one embodiment, when the first node does not perform uplink transmission between the first signal and the first time unit set, the spatial relationship of the first signal is default.

As one embodiment, when the first signal occupies the first uplink symbol after the first time unit set, the spatial relationship of the first signal is default.

As one embodiment, when the first node transmits a PUSCH between the first signal and the first time unit set, the spatial relationship of the first signal depends on a third TCI state.

As one embodiment, when the first node performs uplink transmission between the first signal and the first time unit set, the spatial relationship of the first signal depends on the third TCI state.

As one embodiment, when the first signal does not occupy the first uplink symbol after the first time unit set, the spatial relationship of the first signal depends on the third TCI state.

### Embodiment 10

Embodiment 10 illustrates a schematic diagram of a spatial relationship of a first signal depending on a first time unit set according to one embodiment of the present application, as shown in FIG. 10. In Embodiment 10, the spatial relationship of the first signal depends on whether the first node monitors a PDCCH for the first type of RNTI between the first signal and the first time unit set.

As one embodiment, the first node does not monitor at least a PDCCH for the first type of RNTI on the first cell in the first time unit set, and the spatial relationship of the first signal depends on whether the first node monitors the PDCCH for the first type of RNTI between the first signal and the first time unit set.

As one embodiment, the spatial relationship of the first signal depends on whether the first node monitors the PDCCH between the first signal and the first time unit set.

As one embodiment, the first node does not monitor at least a PDCCH for the first type of RNTI on the first cell in the first time unit set, and the spatial relationship of the first signal depends on whether the first node monitors the PDCCH between the first signal and the first time unit set.

As one embodiment, the first node does not monitor at least a PDCCH on the first cell in the first time unit set, and the spatial relationship of the first signal depends on whether the first node monitors the PDCCH between the first signal and the first time unit set.

As one embodiment, the spatial relationship of the first signal depends on whether the first node receives a downlink signal between the first signal and the first time unit set.

As one embodiment, the first node does not monitor at least a PDCCH for the first type of RNTI on the first cell in the first time unit set, and the spatial relationship of the first signal depends on whether the first node receives the downlink signal between the first signal and the first time unit set.

As one embodiment, the spatial relationship of the first signal depends on whether the first signal occupies the first downlink symbol after the first time unit set.

As one embodiment, the first node does not monitor at least a PDCCH for the first type of RNTI on the first cell in the first time unit set, and the spatial relationship of the first signal depends on whether the first signal occupies the first downlink symbol after the first time unit set.

As one embodiment, when the first node does not monitor a PDCCH for the first type of RNTI between the first signal and the first time unit set, the spatial relationship of the first signal is default.

As one embodiment, when the first node monitors a PDCCH for the first type of RNTI between the first signal and the first time unit set, the spatial relationship of the first signal depends on the third TCI state.

As one embodiment, when the first node does not monitor a PDCCH between the first signal and the first time unit set, the spatial relationship of the first signal is default.

As one embodiment, when the first node monitors a PDCCH between the first signal and the first time unit set, the spatial relationship of the first signal depends on the third TCI state.

As one embodiment, when the first node does not receive a downlink signal between the first signal and the first time unit set, the spatial relationship of the first signal is default.

As one embodiment, when the first node receives a downlink signal between the first signal and the first time unit set, the spatial relationship of the first signal depends on a third TCI state.

As one embodiment, when the first signal occupies the first downlink symbol after the first time unit set, the spatial relationship of the first signal is default.

As one embodiment, when the first signal does not occupy the first downlink symbol after the first time unit set, the spatial relationship of the first signal depends on the third TCI state.

### Embodiment 11

Embodiment 11 illustrates a schematic diagram of a spatial relationship of a first signal depending on a first time unit set according to one embodiment of the present application, as shown in FIG. 11. In Embodiment 11, the spatial relationship of the first signal depends on whether the first node receives a TCI state activation applied to the first cell between the first signal and the first time unit set.

As one embodiment, the TCI state activation applied to the first cell is borne by an MAC CE.

As one embodiment, the TCI state activation applied to the first cell is borne by DCI.

As one embodiment, the TCI state activation applied to the first cell is borne by an RRC signaling.

As one embodiment, the TCI state activated in the TCI state activation applied to the first cell is applied to the first cell.

As one embodiment, the spatial relationship of the first signal depends on whether a higher layer of the first node receives the TCI state activation applied to the first cell between the first signal and the first time unit set.

As one embodiment, when the first node does not receive the TCI state activation applied to the first cell between the first signal and the first time unit set, the spatial relationship of the first signal is default.

As one embodiment, the characteristics of the above method comprise: after the first time unit set and before the first node receives the TCI state activation applied to the first cell, the spatial relationship of the first signal is default.

As one embodiment, the benefits of the above method comprise: avoiding performance losses caused by inaccurate spatial relationships and improving the robustness of downlink or uplink transmission.

As one embodiment, when the first node receives the TCI state activation applied to the first cell between the first signal and the first time unit set, the spatial relationship of the first signal depends on a third TCI state.

As one embodiment, the third TCI state is one TCI state activated in the TCI state activation applied to the first cell.

As one embodiment, the first node receives the first signal on the first cell after the first time unit set, and the third TCI state is one TCI state for the DL that is activated in the TCI state activation applied to the first cell.

As one embodiment, the first node transmits the first signal on the first cell after the first time unit set, and the third TCI state is one TCI state for the UL that is activated in the TCI state activation applied to the first cell.

As one embodiment, the phrase "whether a TCI state activation applied to the first cell is received" refers to: whether a command used for activating the TCI state applied to the first cell is received.

As one embodiment, the phrase "whether a TCI state activation applied to the first cell is received" refers to: whether a signaling used for activating the TCI state applied to the first cell is received.

As one sub-embodiment of the above embodiment, the signaling is an RRC signaling.

As one sub-embodiment of the above embodiment, the signaling is an MAC CE.

As one sub-embodiment of the above embodiment, the signaling is DCI.

As one embodiment, when a length of the first time unit set is greater than a first threshold and the first node does not receive a TCI state activation applied to the first cell between the first signal and the first time unit set, the spatial relationship of the first signal is default.

As one embodiment, when a length of the first time unit set is less than a first threshold, or when the first node receives a TCI state activation applied to the first cell between the first signal and the first time unit set, the spatial relationship of the first signal depends on a third TCI state.

As one embodiment, the spatial relationship of the first signal depends on whether the first node receives a first type of higher layer parameters configured on the first cell between the first signal and the first time unit set; and the first higher layer parameters comprise higher layer parameters of which the name comprises *"tci-StatesPDCCH".*

As one embodiment, when the first node does not receive the first type of higher layer parameters configured on the first cell between the first signal and the first time unit set, the spatial relationship of the first signal is default.

As one embodiment, when the first node receives the first type of higher layer parameters configured on the first cell between the first signal and the first time unit set, the spatial relationship of the first signal depends on the third TCI state.

As one embodiment, the third TCI state is one TCI state indicated by the first type of higher layer parameters.

As one embodiment, the spatial relationship of the first signal depends on whether the first node receives a second type of higher layer parameters configured on the first cell between the first signal and the first time unit set; and the second type of higher layer parameters comprise higher layer parameters of which the name comprises *"tci-State".*

As one embodiment, when the first node does not receive the second type of higher layer parameters configured on the first cell between the first signal and the first time unit set, the spatial relationship of the first signal is default.

As one embodiment, when the first node receives the second type of higher layer parameters configured on the first cell between the first signal and the first time unit set, the spatial relationship of the first signal depends on the third TCI state.

As one embodiment, the third TCI state is one TCI state indicated by the second type of higher layer parameters.

As one embodiment, the spatial relationship of the first signal depends on whether the first node reports CSI between the first signal and the first time unit set.

As one embodiment, the spatial relationship of the first signal depends on whether the first node reports the CSI for the first cell between the first signal and the first time unit set.

As one embodiment, when the first node does not report the CSI between the first signal and the first time unit set, the spatial relationship of the first signal is default.

As one embodiment, when the first node does not report the CSI for the first cell between the first signal and the first time unit set, the spatial relationship of the first signal is default.

As one embodiment, the characteristics of the above method comprise: after the first time unit set and before the CSI is reported on the first node, the spatial relationship of the first signal is default.

As one embodiment, the characteristics of the above method comprise: after the first time unit set and before the CSI for the first cell is reported on the first node, the spatial relationship of the first signal is default.

As one embodiment, the benefits of the above method comprise: avoiding performance losses caused by inaccurate spatial relationships and improving the robustness of downlink or uplink transmission.

As one embodiment, when the first node reports the CSI between the first signal and the first time unit set, the spatial relationship of the first signal depends on the third TCI state.

As one embodiment, when the first node reports the CSI for the first cell between the first signal and the first time unit set, the spatial relationship of the first signal depends on the third TCI state.

### Embodiment 12

Embodiment 12 illustrates a schematic diagram of a spatial relationship of a first signal depending on a first time unit set according to one embodiment of the present application, as shown in FIG. 12. In Embodiment 12, the spatial relationship of the first signal depends on whether the first node receives a DCI format that provides an indicated TCI state applied to the first cell between the first signal and the first time unit set.

As one embodiment, the DCI format that provides an indicated TCI state applied to the first cell is a DCI format 1_1 or a DCI format 1_2.

As one embodiment, the CRC of the DCI format that provides an indicated TCI state applied to the first cell is scrambled by the first type of RNTI.

As one embodiment, the CRC of the DCI format that provides an indicated TCI state applied to the first cell is scrambled by a C-RNTI.

As one embodiment, the CRC of the DCI format that provides an indicated TCI state applied to the first cell is scrambled by a CS-RNTI.

As one embodiment, the CRC of the DCI format that provides an indicated TCI state applied to the first cell is scrambled by an MCS-C-RNTI.

As one embodiment, the DCI format that provides an indicated TCI state applied to the first cell comprises downlink assignment.

As one embodiment, the DCI format that provides an indicated TCI state applied to the first cell does not comprise downlink assignment.

As one embodiment, the DCI format that provides an indicated TCI state applied to the first cell refers to: a DCI format providing a TCI state indication applied to the first cell.

As one embodiment, the DCI format that provides an indicated TCI state applied to the first cell refers to: a DCI format indicating at least one TCI state, and the at least one TCI state is applied to the first cell.

As one embodiment, the DCI format that provides an indicated TCI state applied to the first cell refers to: a DCI format providing an indication of at least one TCI state, and the at least one TCI state is applied to the first cell.

As one embodiment, the DCI format that provides an indicated TCI state applied to the first cell indicates at least one TCI state.

As one embodiment, the at least one TCI state is one TCI state.

As one embodiment, the at least one TCI state is two TCI states.

As one embodiment, the at least one TCI state is three TCI states.

As one embodiment, the at least one TCI state is four TCI states.

As one embodiment, a DCI field Transmission configuration indication of the DCI format that provides an indicated TCI state applied to the first cell indicates at least one TCI state.

As one embodiment, any TCI state in the at least one TCI state is configured by *dl-OrJoint-TCIStateList* or *ul-TCI-StateList.*

As one embodiment, any TCI state in the at least one TCI state is configured by *dl-OrJoint-TCIStateList* or *ul-TCI-StateList* on the first cell.

As one embodiment, the indicated TCI state refers to: the at least one TCI state.

As one embodiment, a given TCI state is one TCI state in the at least one TCI state, and the given TCI state is applied to at least two physical channels.

As one embodiment, the at least two physical channels are on the first cell.

As one embodiment, the at least two physical channels comprise two PDSCHs.

As one embodiment, the at least two physical channels comprise two PDCCHs.

As one embodiment, the at least two physical channels comprise a PDCCH and a PDSCH.

As one embodiment, the at least two physical channels comprise two PUSCHs.

As one embodiment, the at least two physical channels comprise two PUCCHs.

As one embodiment, the at least two physical channels comprise a PUCCH and a PUSCH.

As one embodiment, the at least two physical channels comprise at least one of a PDSCH and a PDCCH, and comprise at least one of a PUSCH and a PUCCH.

As one embodiment, the first node receives the first signal on the first cell after the first time unit set, and the at least two physical channels comprise at least one of a PDSCH or a PDCCH.

As one embodiment, the first node receives the first signal on the first cell after the first time unit set, and any physical channel in the at least two physical channels is one of a PDSCH or a PDCCH.

As one embodiment, the first node transmits the first signal on the first cell after the first time unit set, and the at least two physical channels comprise at least one of a PUSCH or a PUCCH.

As one embodiment, the first node receives the first signal on the first cell after the first time unit set, and any physical channel in the at least two physical channels is one of a PUSCH or a PUCCH.

As one embodiment, the given TCI state is any TCI state in the at least one TCI state.

As one embodiment, the first node receives the first signal on the first cell after the first time unit set, and the given TCI state is one TCI state for the DL in the at least one TCI state.

As one embodiment, the first node transmits the first signal on the first cell after the first time unit set, and the given TCI state is one TCI state for the UL in the at least one TCI state.

As one embodiment, the first node is configured with at least one of *dl-OrJoint-TCIStateList* or *ul-TCI-StateList.*

As one embodiment, the first node is configured with at least one of *dl-OrJoint-TCIStateList* or *ul-TCI-StateList* on the first cell.

As one embodiment, when the first node does not receive a DCI format that provides an indicated TCI state applied to the first cell between the first signal and the first time unit set, the spatial relationship of the first signal is default.

As one embodiment, the characteristics of the above method comprise: after the first time unit set and before the first node receives a DCI format that provides a TCI state indication applied to the first cell, the spatial relationship of the first signal is default.

As one embodiment, the benefits of the above method comprise: avoiding performance losses caused by inaccurate spatial relationships and improving the robustness of downlink or uplink transmission.

As one embodiment, when the first node receives a DCI format that provides an indicated TCI state applied to the first cell between the first signal and the first time unit set, the spatial relationship of the first signal depends on a third TCI state.

As one embodiment, the third TCI state is one TCI state indicated by the DCI format that provides an indicated TCI state applied to the first cell.

As one embodiment, the third TCI state is one of at least one TCI state.

As one embodiment, the first node receives the first signal on the first cell after the first time unit set, and the third TCI state is one TCI state for the DL in the at least one TCI state.

As one sub-embodiment of the above embodiment, the third TCI state is the first of TCI states for the DL in the at least one TCI state.

As one sub-embodiment of the above embodiment, the third TCI state is the second of TCI states for the DL in the at least one TCI state.

As one embodiment, the first node transmits the first signal on the first cell after the first time unit set, and the third TCI state is one TCI state for UL in the at least one TCI state.

As one sub-embodiment of the above embodiment, the third TCI state is the first of TCI states for the UL in the at least one TCI state.

As one sub-embodiment of the above embodiment, the third TCI state is the second of TCI states for the UL in the at least one TCI state.

As one embodiment, when the length of the first time unit set is greater than a first threshold and the first node does not receive a DCI format that provides an indicated TCI state applied to the first cell between the first signal and the first time unit set, the spatial relationship of the first signal is default.

As one embodiment, when a length of the first time unit set is less than a first threshold, or when the first node receives a DCI format that provides an indicated TCI state applied to the first cell between the first signal and the first time unit set, the spatial relationship of the first signal depends on a third TCI state.

### Embodiment 13

Embodiment 13 illustrates a schematic diagram of a spatial relationship of a first signal according to one embodiment of the present application, as shown in FIG. 13. In Embodiment 13, the meaning of "the spatial relationship of the first signal is default" refers to: the spatial relationship of the first signal depends on an RS resource identified during random access.

As one embodiment, the meaning of "the first node receives the first signal on the first cell after the first time unit set, and the spatial relationship of the first signal is default" refers to: the spatial relationship of the first signal depends on the RS resource identified during random access.

As one embodiment, a DMRS of the first signal and an RS in the RS resource identified in the random access process are quasi co-located.

As one embodiment, a DMRS of the first signal and an RS in the RS resource identified in the random access process are quasi co-located and the corresponding QCL (Quasi Co-Location) type comprises a TypeD.

As one embodiment, the first node assumes that a DMRS of the first signal and an RS in the RS resource identified in the random access process are quasi co-located.

As one embodiment, the first node assumes that a DMRS of the first signal and an RS in the RS resource identified in the random access process are quasi co-located and the corresponding QCL type comprises a TypeD.

As one embodiment, large-scale properties of a channel on which the DMRS of the first signal is transmitted may be inferred from large-scale properties of a channel on which the RS in the RS resource identified in the random access process is transported.

As one embodiment, the large-scale properties comprise spatial reception parameters.

As one embodiment, the first node transmits the first signal on the first cell after the first time unit set with the same spatial domain filter or spatial filter and receives the RS in the RS resource identified in the random access process.

As one embodiment, the first node transmits the DMRS of the first signal with the same spatial domain filter or spatial filter and receives the RS in the RS resource identified in the random access process.

As one embodiment, the random access process refers to: an initial access process.

As one embodiment, the random access process refers to: an initial random access process.

As one embodiment, the random access process refers to: a random access process initialized by reconfiguration with a sync procedure.

As one embodiment, the identified RS resource is an SS/PBCH block resource.

As one embodiment, the identified RS resource is a CSI-RS resource.

As one embodiment, the random access process comprises: receiving one set of SS/PBCH blocks.

As one embodiment, the random access process comprises: receiving one set of SS/PBCH blocks or CSI-RSs.

As one embodiment, the random access process comprises: transmitting a random access preamble in a PRACH.

As one embodiment, the random access process comprises: transmitting one PUSCH after transmitting the random access preamble in the PRACH.

As one embodiment, the random access process comprises: receiving an RAR (Random-Access Response) message.

As one embodiment, the RAR message comprises at least one of one DCI format and one PDSCH.

As one sub-embodiment of the above embodiment, the CRC of the one DCI format is scrambled by an RA (Random Access)-RNTI.

As one sub-embodiment of the above embodiment, the one PDSCH is scheduled by the one DCI format.

As one sub-embodiment of the above embodiment, the RAR message comprises at least one PDCCH in the one PDCCH and the one PDSCH.

As one sub-embodiment of the above embodiment, the RAR message comprises the one PDCCH and the one PDSCH.

As one embodiment, the random access process comprises: transmitting a PUSCH scheduled by an RAR UL grant.

As one embodiment, the random access process comprises: receiving a PDSCH comprising a UE contention resolution identity.

As one embodiment, the random access process comprises transmitting a random access preamble in a PRACH, and at least one of a PRACH occasion occupied by the PRACH or the random access preamble is used for determining the identified RS resource.

As one embodiment, the random access process comprises transmitting a random access preamble in a PRACH, and an SS/PBCH block index of the identified RS resource is mapped to the PRACH occasion occupied by the PRACH.

As one embodiment, the random access process comprises transmitting a random access preamble in a PRACH, and the identified RS resource is an SS/PBCH block resource identified by an SS/PBCH block resource index mapped to the PRACH occasion occupied by the PRACH.

As one embodiment, the random access process comprises transmitting a random access preamble in a PRACH, and the random access preamble is associated with the SS/PBCH block index of the identified RS resource.

As one embodiment, the random access process comprises transmitting a random access preamble in a PRACH, and the identified RS resource is the SS/PBCH block resource identified by the SS/PBCH block resource index associated with the random access preamble.

### Embodiment 14

Embodiment 14 illustrates a schematic diagram of a spatial relationship of a first signal according to one embodiment of the present application, as shown in FIG. 14. In Embodiment 14, the meaning of "the spatial relationship of the first signal is default" refers to: the spatial relationship of the first signal depends on the spatial relationship of the PUSCH scheduled by the RAR UL grant in the random access process.

As one embodiment, the meaning of "the first node transmits the first signal on the first cell after the first time unit set, and the spatial relationship of the first signal is default" refers to: the spatial relationship of the first signal depends on the spatial relationship of the PUSCH scheduled by the RAR UL grant in the random access process.

As one embodiment, a UL Tx spatial filter of the first signal is the same as a UL Tx spatial filter of the PUSCH scheduled by the RAR UL grant in the random access process.

As one embodiment, the first node assumes that the UL Tx spatial filter of the first signal is the same as the UL Tx spatial filter of the PUSCH scheduled by the RAR UL grant in the random access process.

As one embodiment, the first node transmits the first signal and the PUSCH scheduled by the RAR UL grant in the random access process with the same spatial domain filter.

As one embodiment, the first node transmits the first signal and the PUSCH scheduled by the RAR UL grant in the random access process with the same antenna port.

### Embodiment 15

Embodiment 15 illustrates a schematic diagram of a spatial relationship of a first signal according to one embodiment of the present application, as shown in FIG. 15. In Embodiment 15, the meaning of "the spatial relationship of the first signal is default" refers to: the spatial relationship of the first signal depends on a second TCI state, and the second TCI state is one TCI state in one TCI state group mapped to the lowest TCI codepoint in a plurality of TCI state groups; and each TCI state group in the plurality of TCI state groups is mapped to one TCI codepoint.

As one embodiment, each TCI state group in the plurality of TCI state groups comprises at least one TCI state.

As one embodiment, one TCI state group in the plurality of TCI state groups comprises only one TCI state.

As one embodiment, one TCI state group in the plurality of TCI state groups comprises two TCI states.

As one embodiment, one TCI state group in the plurality of TCI state groups comprises 3 or 4 TCI states.

As one embodiment, the first node receives the first signal on the first cell after the first time unit set, and each TCI state group in the plurality of TCI state groups comprises at least one TCI state for DL.

As one embodiment, the first node transmits the first signal on the first cell after the first time unit set, and each TCI state group in the plurality of TCI state group comprises at least one TCI state for the UL.

As one embodiment, the plurality of TCI state groups are a plurality of activated TCI state groups.

As one embodiment, the first MAC CE is used for activating K TCI state groups, and K is a positive integer greater than 1; and each TCI state group in the plurality of TCI state groups is one of the K TCI state groups.

As one embodiment, the K TCI state groups are mapped to K TCI codepoints, respectively.

As one embodiment, the first MAC CE indicates a TCI codepoint mapped by each TCI state group in the K TCI state groups.

As one embodiment, the first node receives the first signal on the first cell after the first time unit set, and the plurality of TCI state groups consist of TCI state groups comprising at least one TCI state group for the DL in the K TCI state groups.

As one embodiment, the first node transmits the first signal on the first cell after the first time unit set, and the plurality of TCI state groups consist of TCI state groups comprising at least one TCI state group for the UL in the K TCI state groups.

As one embodiment, the plurality of TCI state groups are the K TCI state groups.

As one embodiment, the first node receives the first signal on the first cell after the first time unit set, and the second TCI state is one TCI state for the DL in the one TCI state group in the plurality of TCI state groups that is mapped to the lowest TCI codepoint.

As one sub-embodiment of the above embodiment, the second TCI state is the first of TCI states for the DL in the one TCI state group in the plurality of TCI state groups that is mapped to the lowest TCI codepoint.

As one sub-embodiment of the above embodiment, the second TCI state is the second of TCI states for the DL in the one TCI state group in the plurality of TCI state groups that is mapped to the lowest TCI codepoint.

As one embodiment, the first node transmits the first signal on the first cell after the first time unit set, and the second TCI state is one TCI state for the UL in the one TCI state group in the plurality of TCI state groups that is mapped to the lowest TCI codepoint.

As one sub-embodiment of the above embodiment, the second TCI state is the first of TCI states for the UL in the one TCI state group in the plurality of TCI state groups that is mapped to the lowest TCI codepoint.

As one sub-embodiment of the above embodiment, the second TCI state is the second of TCI states for the UL in the one TCI state group in the plurality of TCI state groups that is mapped to the lowest TCI codepoint.

As one embodiment, "the spatial relationship of the first signal depends on a second TCI state" refers to: a TCI state of the first signal is the second TCI state.

As one embodiment, the second TCI state indicates a second RS resource.

As one embodiment, the second TCI state indicates that a QCL type corresponding to the second RS resource comprises the TypeD.

As one embodiment, QCL-Info comprising a *qcl-Type* set to a "typeD" in a TCI-state IE configuring the second TCI state indicates the second RS resource.

As one embodiment, the second RS resource is a CSI-RS resource or an SS/PBCH block resource.

As one embodiment, the second RS resource is one of the CSI-RS resource, the SS/PBCH block resource, or an SRS resource.

As one embodiment, "the spatial relationship of the first signal depends on a second TCI state" refers to: a DMRS of the first signal and an RS in the second RS resource are quasi co-located.

As one embodiment, "the spatial relationship of the first signal depends on a second TCI state" refers to: a DMRS of the first signal and an RS in the second RS resource are quasi co-located and the corresponding QCL type comprises a TypeD.

As one embodiment, "the first node receives the first signal on the first cell after the first time unit set, and the spatial relationship of the first signal depends on a second TCI state" refers to: a DMRS of the first signal and an RS in the second RS resource are quasi co-located.

As one embodiment, "the first node receives the first signal on the first cell after the first time unit set, and the spatial relationship of the first signal depends on a second TCI state" refers to: a DMRS of the first signal and an RS in the second RS resource are quasi co-located and the corresponding QCL type comprises a TypeD.

As one embodiment, "the first node receives the first signal on the first cell after the first time unit set, and the spatial relationship of the first signal depends on a second TCI state" refers to: the large-scale properties of a channel on which a DMRS of the first signal is transmitted may be inferred from the large-scale properties of a channel on which an RS in the second RS resource is transmitted.

As one embodiment, "the spatial relationship of the first signal depends on a second TCI state" refers to: the second TCI state is used for determining a spatial domain filter for the first signal.

As one embodiment, "the first node transmits the first signal on the first cell after the first time unit set, and the spatial relationship of the first signal depends on a second TCI state" refers to: the first node transmits the first signal according to a spatial relationship with a reference to one RS, and the one RS is used for determining an UL Tx spatial filter.

As one sub-embodiment of the above embodiment, the one RS is determined based on an RS configured with a *qcl-Type* set to a "typeD" that is comprised in the second TCI state.

As one sub-embodiment of the above embodiment, the one RS is determined based on an RS comprised in the second TCI state.

As one embodiment, "the first node transmits the first signal on the first cell after the first time unit set, and the spatial relationship of the first signal depends on a second TCI state" refers to: the first node transmits the first signal and receives or transmits an RS in the second RS resource with the same spatial domain filter.

As one embodiment, "the first node transmits the first signal on the first cell after the first time unit set, and the spatial relationship of the first signal depends on a second TCI state" refers to: the first node transmits a DMRS of the first signal and receives or transmits an RS in the second RS resource with the same spatial domain filter.

As one embodiment, "the first node transmits the first signal on the first cell after the first time unit set, and the spatial relationship of the first signal depends on a second TCI state" refers to: the first node transmits the first signal and transmits an RS in the second RS resource with the same antenna port.

As one embodiment, "the first node transmits the first signal on the first cell after the first time unit set, and the spatial relationship of the first signal depends on a second TCI state" refers to: the first signal is transmitted by the same antenna port as an SRS port of at least one SRS resource, and a TCI state of the at least one SRS port is the second TCI state.

As one embodiment, "the first node transmits the first signal on the first cell after the first time unit set, the spatial relationship of the first signal depends on the second TCI state" refers to: the first signal is transmitted by the same antenna port as the SRS port of at least one SRS resource, and the first node transmits an SRS in the at least one SRS resource and receives or transmits an RS in the second RS resource with the same spatial domain filter.

### Embodiment 16

Embodiment 16 illustrates a schematic diagram of a spatial relationship of a first signal according to one embodiment of the present application, as shown in FIG. 16. In Embodiment 16, the meaning of "the spatial relationship of the first signal is default" refers to: the spatial relationship of the first signal depends on a spatial relationship of a first resource set.

As one embodiment, the first resource set is one CORESET (Control resource set).

As one embodiment, the first node receives the first signal on the first cell after the first time unit set, and the first resource set is one CORESET.

As one embodiment, the first node transmits the first signal on the first cell after the first time unit set, and the first resource set is one CORESET.

As one embodiment, the first resource set is a CORESET indexed to 0.

As one embodiment, the first resource set is a CORESET#0.

As one embodiment, the first resource set is not configured with a *followUnifiedTCIstate* set to "enabled".

As one embodiment, the first resource set is one CORESET with the lowest ControlResourceSetId in the CORESETs configured for the first node that are not configured with *a followUnifiedTCIstate* set to "enabled".

As one embodiment, the first resource set is one CORESET with the lowest ControlResourceSetId in the CORESETs configured for the first node in a BWP (BandWidth Part) to which the first signal belongs that are not configured with a *followUnifiedTCIstate* set to "enabled".

As one embodiment, the first resource set is one CORESET with the lowest ControlResourceSetId in the CORESETs configured for the first node in a BWP to which the first signaling belongs that are not configured with *a followUnifiedTCIstate* set to "enabled".

As one embodiment, the first resource set is one CORESET with the lowest ControlResourceSetId in the CORESETs configured for the first node in a cell to which the first information block belongs that are not configured with *a followUnifiedTCIstate* set to "enabled".

As one embodiment, the first resource set is a CORESET with the lowest ControlResourceSetId that a search space monitored in the most recent slot in which the first node monitors one or more CORESETs in an active BWP is associated with.

As one embodiment, the first resource set is a CORESET with the lowest ControlResourceSetId in the CORESETs that a search space monitored in the most recent slot in which the first node monitors one or more CORESETs in an active BWP is associated with and that are not configured with a *followUnifiedTCIstate* set to "enabled".

As one embodiment, the first resource set is one search space set.

As one embodiment, the first resource set is one PUCCH resource.

As one embodiment, the first node transmits the first signal on the first cell after the first time unit set, and the first resource set is one PUCCH resource.

As one embodiment, the first resource set is a PUCCH resource with the lowest ID.

As one embodiment, the first resource set is a PUCCH resource with the lowest ID in an active BWP.

As one embodiment, the first resource set is a dedicated PUCCH resource with the lowest ID in an active BWP.

As one embodiment, the first resource set is a PUCCH resource with the lowest ID in a BWP to which the first signal belongs.

As one embodiment, the first resource set is a dedicated PUCCH resource with the lowest ID in a BWP to which the first signal belongs.

As one embodiment, an ID of one PUCCH resource refers to: a PUCCH-ResourceId.

As one embodiment, the spatial relationship of the first signal is the spatial relationship of the first resource set.

As one embodiment, a DMRS of the first signal and an RS with respect to a QCL parameter for a PDCCH in the first resource set are quasi co-located.

As one embodiment, the first node receives the first signal on the first cell after the first time unit set, and a DMRS of the first signal and an RS with respect to a QCL parameter for a PDCCH in the first resource set are quasi co-located.

As one embodiment, the first node assumes that a DMRS of the first signal and an RS with respect to a QCL parameter for a PDCCH in the first resource set are quasi co-located.

As one embodiment, the RS with respect to the QCL parameter for the PDCCH in the first resource set refers to: an RS that is indicated by the QCL parameter of the first resource set.

As one embodiment, the RS with respect to the QCL parameter for the PDCCH in the first resource set refers to: an RS that is indicated by the QCL parameter of the first resource set and is configured with a *qcl-type* set to a "typeD".

As one embodiment, the RS with respect to the QCL parameter for the PDCCH in the first resource set refers to: an RS that is indicated by the QCL parameter of the first resource set and corresponds to a QCL type comprising a TypeD.

As one embodiment, the RS with respect to the QCL parameter for the PDCCH in the first resource set refers to: an RS that is quasi co-located with a DMRS of the PDCCH in the first resource set.

As one embodiment, the RS with respect to the QCL parameter for the PDCCH in the first resource set refers to: an RS with which a DMRS of the PDCCH in the first resource set is quasi co-located and the corresponding QCL type comprises a TypeD.

As one embodiment, a DMRS of the first signal is quasi co-located with a DMRS of the PDCCH in the first resource set.

As one embodiment, a DMRS of the first signal is quasi co-located with a DMRS of the PDCCH in the first resource set and corresponds to a QCL type comprising a TypeD.

As one embodiment, the first node transmits the first signal on the first cell after the first time unit set, and the first node transmits the first signal according to a spatial relationship with a reference to an RS corresponding to the first resource set and configured with a *qcl-type* set to "typeD".

As one sub-embodiment of the above embodiment, the first resource set is one CORESET.

As one embodiment, the first node transmits the first signal and receives an RS with respect to a QCL parameter for the PDCCH in the first resource set with the same spatial domain filter.

As one embodiment, the first node transmits the first signal and receives a DMRS of the PDCCH in the first resource set with the same spatial domain filter.

As one embodiment, the first node transmits the first signal on the first cell after the first time unit set, and the first node transmits the first signal according to a spatial relationship corresponding to the first resource set.

As one sub-embodiment of the above embodiment, the first resource set is one PUCCH resource.

As one embodiment, the first node transmits the first signal and receives or transmits an RS with respect to a spatial relationship corresponding to the first resource set with the same spatial domain filter.

As one embodiment, the RS with respect to the spatial relationship corresponding to the first resource set refers to: an RS that is indicated by the spatial relationship of the first resource set.

As one embodiment, the RS with respect to the spatial relationship corresponding to the first resource set refers to: an RS that is indicated by the spatial relationship of the first resource set and configured with a *qel-type* set to "typeD".

As one embodiment, the RS with respect to the spatial relationship corresponding to the first resource set refers to: an RS that is indicated by a TCI state of the first resource set.

As one embodiment, the RS with respect to the spatial relationship corresponding to the first resource set refers to: an RS that is indicated by a TCI state of the first resource set and configured with a *qcl-type* set to "typeD".

As one embodiment, the meaning of "the RS with respect to the spatial relationship corresponding to the first resource set" refers to: a spatial domain filter used for receiving or transmitting the related RS is used by the first node as a reference for a spatial domain filter used for transmitting the PUCCH in the first resource set.

As one embodiment, the meaning of "the RS with respect to the spatial relationship corresponding to the first resource set" refers to: the first node transmits the PUCCH in the first resource set with the same spatial domain filter as that used for receiving or transmitting the related RS.

As one embodiment, the meaning of "the RS with respect to the spatial relationship corresponding to the first resource set" refers to: a spatial domain filter used for receiving or transmitting the related RS is used by the first node as a reference for a spatial domain filter used for transmitting a DMRS of the PUCCH in the first resource set.

As one embodiment, the meaning of "the RS with respect to the spatial relationship corresponding to the first resource set" refers to: the first node transmits a DMRS of the PUCCH in the first resource set with the same spatial domain filter as that used for receiving or transmitting the related RS.

As one embodiment, the first node transmits the first signal and transmits the PUCCH in the first resource set with the same spatial domain filter.

As one embodiment, the first node transmits the first signal and transmits the PUCCH in the first resource set with the same antenna port.

### Embodiment 17

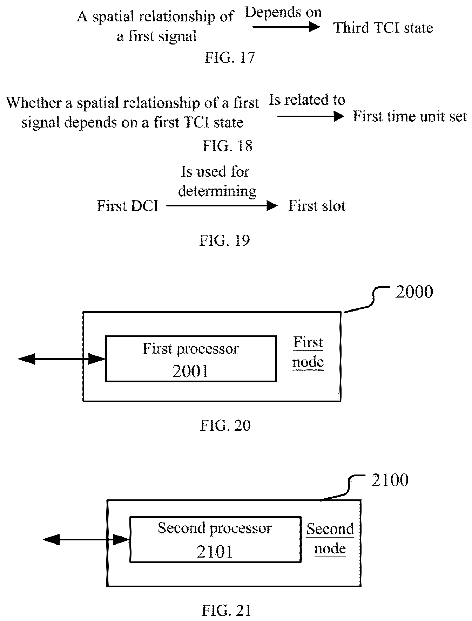

Embodiment 17 illustrates a schematic diagram of a spatial relationship of a first signal depending on a third TCI state according to one embodiment of the present application, as shown in FIG. 17.

As one embodiment, the third TCI state is the third TCI state in any one of Embodiment 8 to Embodiment 12.

As one embodiment, "the spatial relationship of the first signal depends on the third TCI state" refers to: a TCI state of the first signal is the third TCI state.

As one embodiment, the third TCI state indicates a first third RS resource.

As one embodiment, the third TCI state indicates that a QCL type corresponding to the third RS resource comprises a TypeD.

As one embodiment, QCL-Info comprising a *qcl-Type* set to a "typeD" in a TCI-state IE configuring the third TCI state indicates the third RS resource.

As one embodiment, the third RS resource is a CSI-RS resource or an SS/PBCH block resource.

As one embodiment, the third RS resource is one of the CSI-RS resource, the SS/PBCH block resource, or an SRS resource.

As one embodiment, "the spatial relationship of the first signal depends on a third TCI state" refers to: a DMRS of the first signal and an RS in the third RS resource are quasi co-located.

As one embodiment, "the spatial relationship of the first signal depends on a third TCI state" refers to: a DMRS of the first signal and an RS in the third RS resource are quasi co-located and the corresponding QCL type comprises a TypeD.

As one embodiment, "the first node receives the first signal on the first cell after the first time unit set, and the spatial relationship of the first signal depends on a third TCI state" refers to: a DMRS of the first signal and an RS in the third RS resource are quasi co-located.

As one embodiment, "the first node receives the first signal on the first cell after the first time unit set, and the spatial relationship of the first signal depends on a third TCI state" refers to: a DMRS of the first signal and an RS in the third RS resource are quasi co-located and the corresponding QCL type comprises a TypeD.

As one embodiment, "the first node receives the first signal on the first cell after the first time unit set, and the spatial relationship of the first signal depends on a third TCI state" refers to: the large-scale properties of a channel on which a DMRS of the first signal is transmitted may be inferred from the large-scale properties of a channel on which an RS in the third RS resource is transmitted.

As one embodiment, "the spatial relationship of the first signal depends on a third TCI state" refers to: the third TCI state is used for determining a spatial domain filter for the first signal.

As one embodiment, "the first node transmits the first signal on the first cell after the first time unit set, and the spatial relationship of the first signal depends on the third TCI state" refers to: the first node transmits the first signal according to a spatial relationship with a reference to one RS, and the one RS is used for determining the UL Tx spatial filter.

As one sub-embodiment of the above embodiment, the one RS is determined based on an RS configured with a *qcl-Type* set to a "typeD" that is comprised in the third TCI state.

As one sub-embodiment of the above embodiment, the one RS is determined based on an RS comprised in the third TCI state.

As one embodiment, "the first node transmits the first signal on the first cell after the first time unit set, and the spatial relationship of the first signal depends on a third TCI state" refers to: the first node transmits the first signal and receives or transmits an RS in the third RS resource with the same spatial domain filter.

As one embodiment, "the first node transmits the first signal on the first cell after the first time unit set, and the spatial relationship of the first signal depends on a third TCI state" refers to: the first node transmits the first signal and transmits an RS in the third RS resource with the same antenna port.

As one embodiment, "the first node transmits the first signal on the first cell after the first time unit set, and the spatial relationship of the first signal depends on a third TCI state" refers to: the first signal is transmitted by the same antenna port as an SRS port of at least one SRS resource, and a TCI state of the at least one SRS port is the third TCI state.

As one embodiment, "the first node transmits the first signal on the first cell after the first time unit set, and the spatial relationship of the first signal depends on a third TCI state" refers to: the first signal is transmitted by the same antenna port as an SRS port of at least one SRS resource, and the first node transmits an SRS in the at least one SRS resource and receives or transmits an RS in the third RS resource with the same spatial domain filter.

As one embodiment, a scheduling signaling of the first signal indicates the third TCI state.

As one embodiment, the scheduling signaling of the first signal is one piece of DCI.

As one embodiment, the scheduling signaling of the first signal is a higher layer signaling.

As one embodiment, the scheduling signaling of the first signal indicates scheduling information of the first signal.

As one embodiment, a first IE comprises scheduling information of the first signal; and the first IE indicates the third TCI state.

As one embodiment, the scheduling information comprises one or more of a time domain resource, a frequency domain resource, an MCS, a DMRS (DeModulation Reference Signal) port, an HARQ (Hybrid Automatic Repeat request) process number, an RV (Redundancy Version), an NDI (New Data Indicator), a TCI state, or an SRI (Sounding Reference Signal Resource Indicator).

As one embodiment, the first IE is one ConfiguredGrantConfig IE.

As one embodiment, the first IE is one SPS-Config IE.

As one embodiment, the first DCI indicates the third TCI state.

As one embodiment, one DCI format that provides an indicated TCI state indicates the third TCI state.

As one embodiment, one DCI format that provides an indicated TCI state applied to the first cell indicates the third TCI state.

### Embodiment 18

Embodiment 18 illustrates a schematic diagram of a spatial relationship of a first signal and a first TCI state according to one embodiment of the present application, as shown in FIG. 18. In Embodiment 18, the first DCI indicates a first TCI state, and whether the spatial relationship of the first signal depends on the first TCI state is related to the first time unit set.

As one embodiment, the first DCI is one DCI format that provides an indicated TCI state applied to the first cell.

As one embodiment, the first DCI is a DCI format 1_1 or a DCI format 1_2.

As one embodiment, CRC of the first DCI is scrambled by the first type of an RNTI.

As one embodiment, CRC of a DCI format of the first DCI is scrambled by a C-RNTI.

As one embodiment, CRC of the first DCI is scrambled by a CS-RNTI.

As one embodiment, CRC of the first DCI is scrambled by an MCS-C-RNTI.

As one embodiment, the first DCI comprises downlink assignment.

As one embodiment, the first DCI does not comprise downlink assignment.

As one embodiment, the TCI state indicated by the first DCI is applied to the first cell.

As one embodiment, the first DCI is transmitted on the first cell.

As one embodiment, the first DCI is transmitted on one cell different from the first cell.

As one embodiment, the DCI field Transmission Configuration Indication of the first DCI indicates the first TCI state.

As one embodiment, the first DCI indicates only one TCI state, and the only one TCI state is the first TCI state.

As one embodiment, the first DCI indicates a plurality of TCI states, and the plurality of TCI states comprise the first TCI state.

As one embodiment, the plurality of TCI states are 2 TCI states.

As one embodiment, the plurality of TCI states are 3 TCI states.

As one embodiment, the plurality of TCI states are 4 TCI states.

As one embodiment, the first node receives the first signal on the first cell after the first time unit set, and the first TCI state is one TCI state for the DL in the plurality of TCI states.

As one sub-embodiment of the above embodiment, the first TCI state is the first of TCI states for the DL in the plurality of TCI states.

As one sub-embodiment of the above embodiment, the first TCI state is the second of TCI states for the DL in the plurality of TCI states.

As one embodiment, the first node transmits the first signal on the first cell after the first time unit set, and the first TCI state is one TCI state for the UL in the plurality of TCI states.

As one sub-embodiment of the above embodiment, the first TCI state is the first of TCI states for the UL in the plurality of TCI states.

As one sub-embodiment of the above embodiment, the first TCI state is the second of TCI states for the UL in the plurality of TCI states.

As one embodiment, the first TCI state is configured by *dl-OrJoint-TCIStateList* or *ul-TCI-StateList.*

As one embodiment, the first TCI state is configured by *dl-OrJoint-TCIStateList* or *ul-TCI-StateList* on the first cell.

As one embodiment, the first TCI state is applied to at least a second channel and a third channel.

As one embodiment, the first TCI state is applied only to the second channel and the third channel.

As one embodiment, the first TCI state is applied to at least another channel other than the second channel and the third channel.

As one embodiment, the second channel and the third channel are physical channels, respectively.

As one embodiment, the second channel and the third channel are two PDSCHs, respectively.

As one embodiment, the second channel and the third channel are two PDCCHs, respectively.

As one embodiment, the second channel is one PDCCH, and the third channel is one PDSCH.

As one embodiment, the second channel and the third channel are two PUSCHs, respectively.

As one embodiment, the second channel and the third channel are two PUCCHs, respectively.

As one embodiment, the second channel is one PUCCH, and the third channel is one PUSCH.

As one embodiment, the second channel is the PDSCH or the PDCCH, and the third channel is the PUSCH or the PUCCH.

As one embodiment, the first node receives the first signal on the first cell after the first time unit set, the second channel is one of the PDSCH or the PDCCH, and the third channel is one of the PDSCH or the PDCCH.

As one embodiment, the first node transmits the first signal on the first cell after the first time unit set, the second channel is one of the PUSCH or the PUCCH, and the third channel is one of the PUSCH or the PUCCH.

As one embodiment, the first time unit set is used for determining whether the spatial relationship of the first signal depends on the first TCI state.

As one embodiment, when the length of the first time unit set is greater than the first threshold, the spatial relationship of the first signal does not depend on the first TCI state.

As one embodiment, when the length of the first time unit set is greater than or equal to the first threshold, the spatial relationship of the first signal does not depend on the first TCI state.

As one embodiment, the characteristics of the above method comprise: after the first node does not monitor the PDCCH for the first type of RNTI within a time unit set of which the length is greater than or not less than the first threshold, the spatial relationship of the first signal does not depend on the first TCI state.

As one embodiment, the characteristics of the above method comprise: after the first node does not transmit the PUSCH within the time unit set of which the length is greater than or not less than the first threshold, the spatial relationship of the first signal does not depend on the first TCI state.

As one embodiment, the benefits of the above method comprise: avoiding performance losses caused by inaccurate spatial relationships and improving the robustness of downlink or uplink transmission.

As one embodiment, when the length of the first time unit set is less than the first threshold, the spatial relationship of the first signal depends on the first TCI state.

As one embodiment, when the length of the first time unit set is less than or equal to the first threshold, the spatial relationship of the first signal depends on the first TCI state.

As one embodiment, "the spatial relationship of the first signal does not depend on the first TCI state" refers to: the spatial relationship of the first signal is independent of the first TCI state.

As one embodiment, "the spatial relationship of the first signal does not depend on the first TCI state" refers to: the determination of the spatial relationship of the first signal is independent of the first TCI state.

As one embodiment, "the spatial relationship of the first signal depends on the first TCI state" refers to: the TCI state of the first signal is the first TCI state.

As one embodiment, the first TCI state indicates a first RS resource.

As one embodiment, the first TCI state indicates that the QCL type corresponding to the first RS resource comprises a TypeD.

As one embodiment, QCL-Info comprising a *qcl-Type* set to a "typeD" in a TCI-state IE configuring the first TCI state indicates the first RS resource.

As one embodiment, the first RS resource is a CSI-RS resource or an SS/PBCH block resource.

As one embodiment, the first RS resource is one of the CSI-RS resource, the SS/PBCH block resource, or an SRS resource.

As one embodiment, "the spatial relationship of the first signal depends on the first TCI state" refers to: a DMRS of the first signal and an RS in the first RS resource are quasi co-located (Quasi co-located).

As one embodiment, "the spatial relationship of the first signal depends on the first TCI state" refers to: a DMRS of the first signal and an RS in the first RS resource are quasi co-located and the corresponding QCL type comprises a TypeD.

As one embodiment, "the first node receives the first signal on the first cell after the first time unit set, and the spatial relationship of the first signal depends on the first TCI state" refers to: a DMRS of the first signal and an RS in the first RS resource are quasi co-located.

As one embodiment, "the first node receives the first signal on the first cell after the first time unit set, and the spatial relationship of the first signal depends on the first TCI state" refers to: a DMRS of the first signal and an RS in the first RS resource are quasi co-located and the corresponding QCL type comprises a TypeD.

As one embodiment, "the first node receives the first signal on the first cell after the first time unit set, and the spatial relationship of the first signal depends on the first TCI state" refers to: the large-scale properties of a channel on which a DMRS of the first signal is transmitted may be inferred from the large-scale properties of a channel on which an RS in the first RS resource is transmitted.

As one embodiment, "the spatial relationship of the first signal depends on the first TCI state" refers to: the first TCI state is used for determining a spatial domain filter for the first signal.

As one embodiment, "the first node transmits the first signal on the first cell after the first time unit set, and the spatial relationship of the first signal depends on the first TCI state" refers to: the first node transmits the first signal according to a spatial relationship with a reference to one RS, and the one RS is used for determining the UL Tx spatial filter.

As one sub-embodiment of the above embodiment, the one RS is determined based on an RS configured with a *qcl-Type* set to a "typeD" that is comprised in the first TCI state.

As one sub-embodiment of the above embodiment, the one RS is determined based on an RS comprised in the first TCI state.

As one embodiment, "the first node transmits the first signal on the first cell after the first time unit set, and the spatial relationship of the first signal depends on the first TCI state" refers to: the first node transmits the first signal and receives or transmits an RS in the first RS resource with the same spatial domain filter.

As one embodiment, "the first node transmits the first signal on the first cell after the first time unit set, and the spatial relationship of the first signal depends on the first TCI state" refers to: the first node transmits the first signal and transmits an RS in the first RS resource with the same antenna port.

As one embodiment, "the first node transmits the first signal on the first cell after the first time unit set, and the spatial relationship of the first signal depends on the first TCI state" refers to: the first signal is transmitted by the same antenna port as an SRS port of at least one SRS resource, and a TCI state of the at least one SRS port is the first TCI state.

As one embodiment, "the first node transmits the first signal on the first cell after the first time unit set, and the spatial relationship of the first signal depends on the first TCI state" refers to: the first signal is transmitted by the same antenna port as an SRS port of at least one SRS resource, and the first node transmits an SRS in the at least one SRS resource and receives or transmits an RS in the first RS resource with the same spatial domain filter.

As one embodiment, when the spatial relationship of the first signal does not depend on the first TCI state, the spatial relationship of the first signal is default.

### Embodiment 19

Embodiment 19 illustrates a schematic diagram of first DCI being used for determining a first slot according to one embodiment of the present application, as shown in FIG. 19.

As one embodiment, the TCI state indicated by the first DCI takes effect starting from the first slot.

As one embodiment, the TCI state indicated by the first DCI is used starting from the first slot.

As one embodiment, the time domain resources occupied by the first DCI are used for determining the first slot.

As one embodiment, the first node transmits HARQ-ACK (Hybrid Automatic Repeat request-Acknowledgement) for the first DCI in a first channel, the time domain resources occupied by the first DCI are used for determining the time domain resources occupied by the first channel, and the time domain resources occupied by the first channel are used for determining the first slot.

As one embodiment, HARQ-ACK for the first DCI indicates whether the first DCI is correctly received.

As one embodiment, the first DCI schedules a first PDSCH, and HARQ-ACK for the first DCI is HARQ-ACK for the first PDSCH.

As one embodiment, the first DCI indicates time domain resources occupied by the first PDSCH.

As one embodiment, HARQ-ACK for the first DCI indicates whether the first PDSCH is correctly received.

As one embodiment, the HARQ-ACK for the first DCI indicates whether the TB (Transport block) carried by the first PDSCH is correctly received.

As one embodiment, the HARQ-ACK comprises ACK.

As one embodiment, the HARQ-ACK comprises NACK (Negative ACKnowledgement).

As one embodiment, the first channel is transmitted in a slot k, and the first slot is the first slot after the slot (k + first offset); and the first offset is one non-negative integer.

As one embodiment, the first slot is the first slot after the first offset number of symbols after the last symbol occupied by the first channel; and the first offset is one non-negative integer.

As one embodiment, the first offset is a positive integer.

As one embodiment, the first offset is related to a sub-carrier spacing of the first channel.

As one embodiment, the first offset is configured by a higher layer signaling.

As one embodiment, the first offset is configured by a higher layer parameter *beamAppTime.*

As one embodiment, the first DCI is used for determining a slot n, the first channel is transmitted in a slot (n + second offset), and the second offset is a non-negative integer.

As one embodiment, the first PDSCH is used for determining a slot n, the first channel is transmitted in a slot (n + second offset), and the second offset is a non-negative integer.

As one embodiment, k is equal to n + the second offset.

As one embodiment, the first DCI is transmitted in the slot n.

As one embodiment, the PDCCH bearing the first DCI is transmitted in the slot n.

As one embodiment, the slot n is a slot to which the last symbol of the PDCCH bearing the first DCI belongs.

As one embodiment, the slot n is the last uplink slot that overlaps with a downlink slot occupied by the reception of the PDCCH bearing the first DCI.

As one embodiment, the slot n is the last uplink slot for PUCCH transmission that overlaps with a downlink slot occupied by the reception of the PDCCH bearing the first DCI.

As one embodiment, the first PDSCH is transmitted in the slot n.

As one embodiment, the slot n is a slot to which the last symbol of the first PDSCH belongs.

As one embodiment, the slot n is the last uplink slot that overlaps with a downlink slot occupied by the reception of the first PDSCH.

As one embodiment, the slot n is the last uplink slot for PUCCH transmission that overlaps with a downlink slot occupied by the reception of the first PDSCH.

As one embodiment, the first DCI indicates the second offset.

As one embodiment, the second offset is configured by a higher layer signaling.

As one embodiment, the second offset is fixed.

As one embodiment, the second offset is related to a sub-carrier spacing of the first DCI.

As one embodiment, the second offset is related to a sub-carrier spacing of the first channel.

As one embodiment, the first channel is a physical channel.

As one embodiment, the first channel is the PUCCH.

As one embodiment, the first channel is the PUSCH.

As one embodiment, the first symbol occupied by the first signal is not earlier than the first symbol of the first slot in the time domain.

### Embodiment 20

Embodiment 20 illustrates a structural block diagram of a processing apparatus used in a first node according to one embodiment of the present application, as shown in FIG. 20. In FIG. 20, the processing apparatus 2000 in the first node comprises a first processor 2001.

In Embodiment 20, the first processor 2001 receives a first information block; and the first processor 2001 receives a first signal on a first cell after a first time unit set, or transmits a first signal on a first cell after a first time unit set.

In Embodiment 20, the first information block is used for determining the first time unit set; a spatial relationship of the first signal depends on the first time unit set; and the first node does not monitor at least a PDCCH for a first type of RNTI on the first cell in the first time unit set, or the first node does not transmit at least a PUSCH on the first cell in the first time unit set.

As one embodiment, the spatial relationship of the first signal depends on whether the length of the first time unit set is greater than a first threshold.

As one embodiment, the spatial relationship of the first signal depends on whether the first node transmits a PUSCH between the first signal and the first time unit set.

As one embodiment, the spatial relationship of the first signal depends on whether the first node monitors a PDCCH for the first type of RNTI between the first signal and the first time unit set.

As one embodiment, the spatial relationship of the first signal depends on whether the first node receives a TCI state activation applied to the first cell between the first signal and the first time unit set.

As one embodiment, the spatial relationship of the first signal depends on whether the first node receives a DCI format that provides an indicated TCI state applied to the first cell between the first signal and the first time unit set.

As one embodiment, the first processor 2001 receives first DCI, the first DCI indicating a first TCI state, wherein the first DCI is used for determining a first slot, and the first signal is no earlier than the first slot in a time domain; and whether the spatial relationship of the first signal depends on the first TCI state is related to the first time unit set.

As one embodiment, the first node device is user equipment.

As one embodiment, the first node device is a relay node device.

As one embodiment, the time unit refers to a symbol or a slot; and the first type of RNTI consists of a C-RNTI, an MCS-C-RNTI, a CS-RNTI, or an SP-CSI-RNTI.

As one embodiment, the first processor 2001 comprises at least one of { an antenna 452, a receiving device/transmitting device 454, a receiving processor 456, a transmitting processor 468, a multi-antenna receiving processor 458, a multi-antenna transmitting processor 457, a controller/processor 459, a memory 460, and a data source 467} in Embodiment 4.

### Embodiment 21

Embodiment 21 illustrates a structural block diagram of a processing apparatus used in a second node according to one embodiment of the present application, as shown in FIG. 21. In FIG. 21, the processing apparatus 2100 in the second node comprises a second processor 2101.

In Embodiment 21, the second processor 2101 transmits a first information block; and the second processor 2101 transmits a first signal on a first cell after a first time unit set, or receives a first signal on a first cell after a first time unit set.

In Embodiment 21, the first information block is used for determining the first time unit set; a spatial relationship of the first signal depends on the first time unit set; and a target recipient of the first information block does not monitor at least a PDCCH for a first type of RNTI on the first cell in the first time unit set, or a target recipient of the first information block does not transmit at least a PUSCH on the first cell in the first time unit set.

As one embodiment, the second node transmits the first signal on the first cell after the first time unit set, and the target recipient of the first information block is a target recipient of the first signal.

As one embodiment, the second node receives the first signal on the first cell after the first time unit set, and the target recipient of the first information block is a sender of the first signal.

As one embodiment, the second node is a maintenance base station of the first cell.

As one embodiment, the spatial relationship of the first signal depends on whether the length of the first time unit set is greater than a first threshold.

As one embodiment, the spatial relationship of the first signal depends on whether the target recipient of the first information block transmits a PUSCH between the first signal and the first time unit set.

As one embodiment, the spatial relationship of the first signal depends on whether the target recipient of the first information block monitors a PDCCH for the first type of RNTI between the first signal and the first time unit set.

As one embodiment, the spatial relationship of the first signal depends on whether the target recipient of the first information block receives a TCI state activation applied to the first cell between the first signal and the first time unit set.

As one embodiment, the spatial relationship of the first signal depends on whether the target recipient of the first information block receives a DCI format that provides an indicated TCI state applied to the first cell between the first signal and the first time unit set.

As one embodiment, the second processor 2101 transmits first DCI, the first DCI indicating a first TCI state, wherein the first DCI is used for determining a first slot, and the first signal is no earlier than the first slot in a time domain; and whether the spatial relationship of the first signal depends on the first TCI state is related to the first time unit set.

As one embodiment, the second node is a base station device.

As one embodiment, the second node is user equipment.

As one embodiment, the second node is a relay node device.

As one embodiment, the time unit refers to a symbol or a slot; and the first type of RNTI consists of a C-RNTI, an MCS-C-RNTI, a CS-RNTI, or an SP-CSI-RNTI.

As one embodiment, the second processor 2101 comprises at least one of {an antenna 420, a receiving device/transmitting device 418, a receiving processor 470, a transmitting processor 416, a multi-antenna receiving processor 472, a multi-antenna transmitting processor 471, a controller/processor 475, and a memory 476} in Embodiment 4.

Those skilled in the art can understand that all or part of the steps in the above method can be completed by instructing the relevant hardware through a program, and the program can be stored in a computer-readable storage medium, such as a read-only memory, a hard disk or an optical disk. Optionally, all or part of the steps in the above embodiment can also be implemented using one or more integrated circuits. Correspondingly, each module unit in the above embodiment can be implemented in the form of hardware or in the form of a software function module. The present application is not limited to any specific form of combination of software and hardware. The user equipment, the terminal and the UE in the present application include but are not limited to a drone, a communication module on the drone, a remote-controlled airplane, an aircraft, a small airplane, a mobile phone, a tablet computer, a laptop, a vehicle-mounted communication device, a transportation vehicle, a vehicle, an RSU, a wireless sensor, an Internet card, an Internet of Things terminal, an RFID terminal, an NB-IOT terminal, an MTC (Machine Type Communication) terminal, an eMTC (enhanced MTC) terminal, a data card, an Internet card, a vehicle-mounted communication device, a low-cost mobile phone, a low-cost tablet computer, and other wireless communication devices. The base station or the system device in the present application includes but is not limited to a macro cellular base station, a micro cellular base station, a small cellular base station, a femtocell, a relay base station, an eNB, a gNB, a TRP (Transmitter Receiver Point), a GNSS, a relay satellite, a satellite base station, an aerial base station, an RSU (Road Side Unit), a drone, a test device, for example, a wireless communication device such as a transceiver or signaling testers that simulate some functions of the base station.

Those skilled in the art should understand that the present invention can be implemented in other specified forms without departing from its core or basic features. Therefore, the embodiments disclosed at present should be regarded as descriptive rather than restrictive in any way. The scope of the invention is determined by the attached claims rather than the previous description, and all changes within the equivalent meaning and area are considered to be included therein.

## Claims

1. A first node for wireless communication, comprising:
a first processor for receiving a first information block, the first information block being used for determining a first time unit set,
the first processor receiving a first signal on a first cell after the first time unit set, or transmitting a first signal on a first cell after the first time unit set,
wherein a spatial relationship of the first signal depends on the first time unit set; and the first node does not monitor at least a PDCCH for a first type of RNTI on the first cell in the first time unit set, or the first node does not transmit at least a PUSCH on the first cell in the first time unit set.

2. The first node according to claim 1, wherein the spatial relationship of the first signal depends on whether a length of the first time unit set is greater than a first threshold.

3. The first node according to claim 1 or 2, wherein the spatial relationship of the first signal depends on whether the first node transmits the PUSCH between the first signal and the first time unit set.

4. The first node according to any one of claims 1 to 3, wherein the spatial relationship of the first signal depends on whether the first node monitors the PDCCH for the first type of RNTI between the first signal and the first time unit set.

5. The first node according to any one of claims 1 to 4, wherein the spatial relationship of the first signal depends on whether the first node receives a TCI state activation applied to the first cell between the first signal and the first time unit set.

6. The first node according to any one of claims 1 to 5, wherein the spatial relationship of the first signal depends on whether the first node receives a DCI format that provides an indicated TCI state applied to the first cell between the first signal and the first time unit set.

7. The first node according to any one of claims 1 to 6, wherein the first processor receives first DCI, the first DCI indicating a first TCI state, wherein the first DCI is used for determining a first slot, and the first signal is no earlier than the first slot in a time domain; and whether the spatial relationship of the first signal depends on the first TCI state is related to the first time unit set.

8. A second node for wireless communication, comprising:
a second processor for transmitting a first information block, the first information block being used for determining a first time unit set,
the second processor transmitting a first signal on a first cell after the first time unit set, or receiving a first signal on a first cell after the first time unit set,
wherein a spatial relationship of the first signal depends on the first time unit set; and a target recipient of the first information block does not monitor at least a PDCCH for a first type of RNTI on the first cell in the first time unit set, or a target recipient of the first information block does not transmit at least a PUSCH on the first cell in the first time unit set.

9. The second node according to claim 8, wherein the spatial relationship of the first signal depends on whether a length of the first time unit set is greater than a first threshold.

10. The second node according to claim 8 or 9, wherein the spatial relationship of the first signal depends on whether the target recipient of the first information block transmits the PUSCH between the first signal and the first time unit set.

11. The second node according to any one of claims 8 to 10, wherein the spatial relationship of the first signal depends on whether the target recipient of the first information block monitors the PDCCH for the first type of RNTI between the first signal and the first time unit set.

12. The second node according to any one of claims 8 to 11, wherein the spatial relationship of the first signal depends on whether the target recipient of the first information block receives a TCI state activation applied to the first cell between the first signal and the first time unit set.

13. The second node according to any one of claims 8 to 12, wherein the spatial relationship of the first signal depends on whether the target recipient of the first information block receives a DCI format that provides an indicated TCI state applied to the first cell between the first signal and the first time unit set.

14. The second node according to any one of claims 8 to 13, wherein the second processor transmits first DCI, the first DCI indicating a first TCI state. wherein the first DCI is used for determining a first slot, and the first signal is no earlier than the first slot in a time domain; and whether the spatial relationship of the first signal depends on the first TCI state is related to the first time unit set.

15. A method used in a first node for wireless communication, comprising:
receiving a first information block, the first information block being used for determining a first time unit set; and
receiving a first signal on a first cell after the first time unit set, or transmitting a first signal on a first cell after the first time unit set,
wherein a spatial relationship of the first signal depends on the first time unit set; and the first node does not monitor at least a PDCCH for a first type of RNTI on the first cell in the first time unit set, or the first node does not transmit at least a PUSCH on the first cell in the first time unit set.

16. The method according to claim 15, wherein the spatial relationship of the first signal depends on whether a length of the first time unit set is greater than a first threshold.

17. The method according to claim 15 or 16, wherein the spatial relationship of the first signal depends on whether the first node transmits the PUSCH between the first signal and the first time unit set.

18. The method according to any one of claims 15 to 17, wherein the spatial relationship of the first signal depends on whether the first node monitors the PDCCH for the first type of RNTI between the first signal and the first time unit set.

19. The method according to any one of claims 15 to 18, wherein the spatial relationship of the first signal depends on whether the first node receives a TCI state activation applied to the first cell between the first signal and the first time unit set.

20. The method according to any one of claims 15 to 19, wherein the spatial relationship of the first signal depends on whether the first node receives a DCI format that provides an indicated TCI state applied to the first cell between the first signal and the first time unit set.

21. The method according to any one of claims 15 to 20, comprising:
receiving first DCI, the first DCI indicating a first TCI state,
wherein the first DCI is used for determining a first slot, and the first signal is no earlier than the first slot in a time domain; and whether the spatial relationship of the first signal depends on the first TCI state is related to the first time unit set.

22. A method used in a second node for wireless communication, comprising:
transmitting a first information block, the first information block being used for determining a first time unit set; and
transmitting a first signal on a first cell after the first time unit set, or receiving a first signal on a first cell after the first time unit set,
wherein a spatial relationship of the first signal depends on the first time unit set; and a target recipient of the first information block does not monitor at least a PDCCH for a first type of RNTI on the first cell in the first time unit set, or a target recipient of the first information block does not transmit at least a PUSCH on the first cell in the first time unit set.

23. The method according to claim 22, wherein the spatial relationship of the first signal depends on whether a length of the first time unit set is greater than a first threshold.

24. The method according to claim 22 or 23, wherein the spatial relationship of the first signal depends on whether the target recipient of the first information block transmits the PUSCH between the first signal and the first time unit set.

25. The method according to any one of claims 22 to 24, wherein the spatial relationship of the first signal depends on whether the target recipient of the first information block monitors the PDCCH for the first type of RNTI between the first signal and the first time unit set.

26. The method according to any one of claims 22 to 25, wherein the spatial relationship of the first signal depends on whether the target recipient of the first information block receives a TCI state activation applied to the first cell between the first signal and the first time unit set.

27. The method according to any one of claims 22 to 26, wherein the spatial relationship of the first signal depends on whether the target recipient of the first information block receives a DCI format that provides an indicated TCI state applied to the first cell between the first signal and the first time unit set.

28. The method according to any one of claims 22 to 27, comprising:
transmitting first DCI, the first DCI indicating a first TCI state,
wherein the first DCI is used for determining a first slot, and the first signal is no earlier than the first slot in a time domain; and whether the spatial relationship of the first signal depends on the first TCI state is related to the first time unit set.
